Europäisches Patentamt

(19) European Patent Office

Office européen des brevets

(11) Numéro de publication : **0 327 435 B1**

(12) **FASCICULE DE BREVET EUROPEEN**

(45) Date de publication du fascicule du brevet :
17.07.91 Bulletin 91/29

(51) Int. Cl.$^5$ : **B64C 11/18**

(21) Numéro de dépôt : 89400243.5

(22) Date de dépôt : 27.01.89

(54) **Profils pour pale d'hélice aérienne carénée.**

(30) Priorité : 05.02.88 FR 8801381

(43) Date de publication de la demande :
09.08.89 Bulletin 89/32

(45) Mention de la délivrance du brevet :
17.07.91 Bulletin 91/29

(84) Etats contractants désignés :
DE GB IT

(56) Documents cités :
EP-A- 0 121 462
FR-A- 2 590 229

(73) Titulaire : OFFICE NATIONAL D'ETUDES ET
DE RECHERCHES
AEROSPATIALES(O.N.E.R.A.)
29, avenue de la Division Leclerc
F-92322 Châtillon Cédex (FR)

Titulaire : AEROSPATIALE SOCIETE
NATIONALE INDUSTRIELLE Société Anonyme
dite:
37, Boulevard de Montmorency
F-75016 Paris (FR)

(72) Inventeur : Rodde, Anne-Marie
12, Allée des Alouettes
F-91370 Verrieres le Buisson (FR)
Inventeur : Reneaux, Joel
8, rue Baillou
F-75014 Paris (FR)
Inventeur : Thibert, Jean-Jacques
1, Square des Erables
F-91370 Verrieres le Buisson (FR)
Inventeur : Vuillet, Alain Eric
22, rue Sophoras La Bergerie
F-13320 Bouc Bel-Air (FR)

(74) Mandataire : Bonnetat, Christian et al
CABINET BONNETAT 23, Rue de Léningrad
F-75008 Paris (FR)

EP 0 327 435 B1

## Description

La présente invention concerne les profils pour les pales des hélices aériennes carénées. Quoique non exclusivement, elle est particulièrement appropriée à la réalisation des hélices carénées de stabilisation transversale des hélicoptères, à celle des hélices sustentatrices de véhicules à coussin d'air, ou bien encore à la réalisation de ventilateurs carénés à pas variable.

On sait que, pour ce type d'hélice carénée, on caractérise les performances par l'"efficacité sustentatrice", encore désignée par "figure de mérite", qui correspond à des conditions de fonctionnement stationnaires et qui est le rapport entre la puissance minimale pour obtenir une traction (ou poussée) donnée et la puissance réelle mesurée. L'expression de cette figure de mérite est donnée par la formule connue suivante :

$$ FM = \frac{1}{2\sqrt{\sigma}} \ \frac{T}{P} \ \sqrt{\frac{T}{\rho \pi R^2}} $$

dans laquelle
FM est la figure de mérite,
T la traction (ou poussée) désirée,
P la puissance nécessaire à fournir à l'hélice,
$\rho$ la masse volumique de l'air,
R le rayon de l'hélice, et

$\sigma$ le coefficient de diffusion du flux aérodynamique en surface, ce coefficient $\sigma$ étant égal au rapport $\frac{S\infty}{S}$, avec

S∞ représentant la surface du flux à l'infini aval et S étant la surface du disque formé par l'hélice en rotation.

Pour augmenter la figure de mérite à puissance et encombrement fixés, il est donc nécessaire d'augmenter la traction de l'hélice. Or cette traction s'exprime, pour une section de largeur unité, par l'expression suivante:

$$ T = 1/2 \, \rho \, Cz \, I \, V^2 $$

dans laquelle
$\rho$ est la masse volumique de l'air,
Cz le coefficient de portance de la section de pale d'hélice considérée,
I la corde de cette section, et
V la vitesse de rotation de la section de la pale d'hélice au rayon considéré.

Pour obtenir des tractions élevées avec de faibles cordes, donc de faibles masses d'hélice, on est ainsi conduit à faire fonctionner les profils à des vitesses et à des coefficients de portances élevés.

Par ailleurs pour une optimisation de la pale complète, il est généralement intéressant du point de vue rendement d'avoir, spécialement dans le cas d'une hélice carénée, une répartition de portance en envergure, qui croît depuis le moyeu jusqu'à l'extrémité de la pale. Les profils d'extrémité, pour lesquels la vitesse relative est la plus élevée, fonctionnent donc également avec les plus forts coefficients de portance d'adaptation. On sait que le coefficient de portance d'adaptation est le coefficient de portance auquel doit travailler le profil avec un coefficient de trainée minimal et pour lequel il est défini.

On sait par ailleurs que, pour les profils connus, l'augmentation de la vitesse et du coefficient de portance se traduit par une augmentation du coefficient de trainée et cette augmentation est d'autant plus rapide que le nombre de Reynolds est plus faible, ce qui est le cas pour les applications visées par la présente invention.

L'utilisation de profils connus conduit donc à des pertes importantes et le rendement d'une hélice carénée présentant un tel profil connu est très faible.

De plus, notamment dans le cas où une telle hélice carénée est destinée à contrôler l'attitude d'un hélicoptère en vol de manoeuvre, elle doit donc être capable de fournir une poussée aussi grande que possible en pas positif et d'un certain niveau en pas négatif, ce qui implique que les profils de pale possèdent des coefficients de portance maximal et minimal élevés et que la plage de coefficient de portance autour du coefficient de portance d'adaptation, pour laquelle le coefficient de trainée reste faible, doit être la plus étendue possible.

Or, les profils classiques utilisés pour les pales d'hélices carénées, tels que les profils NACA 63 ou NACA 16 ou même des profils plus récents, ne possèdent pas de bonnes performances en ce qui concerne les coefficients de portance maximal et minimal et les plages de fonctionnement autour du coefficient de portance d'adaptation sont très faibles.

Un type de profil est connu par le document FR-A-2 590 229 (O.N.E.R.A.).

L'objet de la présente invention est donc une nouvelle famille de profils pour pale d'hélice carénée permettant la définition complète de la pale et conférant à l'hélice de très bonnes performances dans les diverses conditions d'utilisation, ces performances étant les suivantes :

— coefficient de portance d'adaptation variant de 0 à 1 entre l'emplanture et l'extrémité de la pale ;
— nombre de Mach de fonctionnement variant entre 0,3 et 0,7 entre l'emplanture et l'extrémité ;
— plage de coefficient de portance pour laquelle le coefficient de trainée reste de faible étendue autour du coefficient de portance d'adaptation ;
— coefficients de portance maximal et minimal élevés, ces performances étant obtenues dans une gamme de nombres de Reynolds variant de $0,5 \times 10^6$ à l'emplanture à $1,3 \times 10^6$ à l'extrémité.

A ces fins, selon l'invention, le profil pour pale d'hélice aérienne carénée, dont l'épaisseur relative par rapport à la corde est comprise entre 9% et 15%, est remarquable en ce que, la courbure dudit profil ayant une valeur maximale au bord d'attaque de celui-ci comprise entre 47 et 98 en fonction de ladite épaisseur relative, la ligne d'extrados dudit profil comporte, du bord d'attaque au bord de fuite, trois portions successives, telles que

— dans la première portion, la courbure décroît rapidement de ladite valeur maximale au bord d'attaque à une valeur voisine de 20 en un premier point dont l'abscisse réduite le long de la corde du profil, comptée à partir du bord d'attaque, est voisine de 1% ;
— dans la deuxième portion, la courbure décroît plus lentement de ladite valeur voisine de 20 audit premier point jusqu'à une valeur voisine de 1 en un deuxième point, dont l'abscisse réduite le long de ladite corde, comptée à partir du bord d'attaque, est voisine de 25% ; et
— dans la troisième portion, la courbure est inférieure à 1 entre ledit deuxième point et ledit bord de fuite, tandis que la ligne d'intrados dudit profil comporte, du bord d'attaque au bord de fuite, trois portions successives, telles que :

— dans la première portion, la courbure décroît de ladite valeur maximale au bord d'attaque à une valeur voisine de 11 en un troisième point dont l'abscisse réduite le long de la corde du profil, comptée à partir dudit bord d'attaque, est voisine de 2% ;
— dans la deuxième portion, qui s'étend dudit troisième point jusqu'à un quatrième point dont l'abscisse réduite le long de la corde du profil comptée à partir dedit bord d'attaque est comprise entre 30% et 70%, la courbure continue de décroître de cette valeur voisine de 11 jusqu'à s'annuler ; et
— dans la troisième portion, la courbure est négative et inférieure à 1 en valeur absolue, jusqu'au bord de fuite.

Comme on le verra plus en détail par la suite, une telle évolution de courbure à l'extrados engendre des écoulements aérodynamiques permettant notamment d'obtenir de très faibles valeurs de la trainée au coefficient de portance d'adaptation, ainsi que des valeurs remarquables pour le coefficient de portance maximal. Par ailleurs, grâce à l'évolution de leur ligne d'intrados, les profils conformes à l'invention présentent de très bonnes performances pour des valeurs du coefficient de portance inférieures au coefficient de portance d'adaptation.

Avantageusement, la valeur COA de la courbure au bord d'attaque, rapportée à la longueur $\underline{l}$ de la corde du profil, est donnée par l'expression

$$COA = a1(e/l) + a2(e/l)^2 + a3(e/l)^3 + a4(e/l)^4 + a5(e/l)^5 \quad (1)$$

dans laquelle
— e/l est l'épaisseur relative maximale du profil, et
— a1, a2, a3, a4 et a5 sont des coefficients constants.

De préférence, lesdits coefficients constants ont les valeurs respectives suivantes :

$a1 = -0,2936.10^6$
$a2 = +0,99839.10^7$
$a3 = -0,12551.10^9$
$a4 = +0,69412.10^9$
$a5 = -0,14276.10^{10}$

Ainsi, par application de la formule (1) avec les valeurs ci-dessus, on vérifie que la courbure au bord d'attaque varie de 47 à 98 pour une épaisseur relative maximale e/l variant de 9% à 15%.

Par ailleurs, il est avantageux que, le long de ladite deuxième portion d'extrados, la courbure (CO) soit donnée par l'expression

$$CO^{\frac{1}{2}} = a6 + a7 \cdot (X/l)^{\frac{1}{2}} + a8 \cdot (X/l), \quad (2)$$

dans laquelle a6, a7 et a8 sont des coefficients constants, X/l étant l'abscisse réduite le long de la corde du profil, comptée à partir du bord d'attaque, d'un point quelconque de cette deuxième portion.

Dans un exemple préféré de réalisation, ces coefficients constants a6, a7 et a8 ont les valeurs respectives suivantes :

$$a6 = + 0,72957.10$$
$$a7 = - 0,31509.10^2$$
$$a8 = + 0,37217.10^2$$

Notamment dans le cas où le coefficient de portance d'adaptation est faible (inférieur à 0,3 par exemple), il est avantageux que ladite troisième portion d'extrados comporte un point d'inversion de courbure, dont l'abscisse réduite le long de la corde du profil, comptée à partir du bord d'attaque, est comprise entre 45% et 85%. L'abscisse réduite dudit point d'inversion de courbure, le long de la corde dudit profil et comptée à partir du bord d'attaque, est alors avantageusement donnée par l'expression

$$XE/l = 0,58333 + 0,91667 \ Cza - 1,1667 \ (Cza)^2, \quad (3)$$

dans laquelle Cza est la valeur du coefficient de portance d'adaptation.

De préférence, l'abscisse réduite du point de courbure nulle de ladite deuxième portion d'extrados est donnée par la formule

$$X/l = a9(e/l) + a10(e/l)^2 + a11(e/l)^3 + a12(e/l)^4 + a13(e/l)^5 \quad (4)$$

dans laquelle
— e/l est l'épaisseur relative maximale du profil (1) et
— a9, a10, a11, a12, et a13 sont des coefficients constants. Ces derniers coefficients constants présentent avantageusement les valeurs respectives suivantes :

$$a9 = - 0,39176.10^3$$
$$a10 = + 0,13407.10^5$$
$$a11 = - 0,16845.10^6$$
$$a12 = + 0,92807.10^6$$
$$a13 = - 0,18878.10^7$$

De façon connue, les profils conformes à la présente invention peuvent être engendrés grâce à une loi de variation d'épaisseur, associée à une loi de cambrure le long de la corde des profils. En variante, ces profils peuvent être définis, pour une épaisseur maximale relative donnée et pour une valeur du coefficient de portance d'adaptation, par des équations liant les coordonnées réduites de l'extrados et de l'intrados.

Des exemples de ces deux types de définition sont donnés dans la suite de la description.

Les figures du dessin annexé feront bien comprendre comment l'invention peut être réalisée.

La figure 1 est une vue générale schématique d'un profil conforme à la présente invention.

Les figures 2A, 2B et 2C sont des diagrammes représentant, pour un profil de l'invention, l'évolution du coefficient de pression en fonction de l'abscisse réduite, respectivement à l'extrados au voisinage du coefficient de portance maximal (figure 2A), à l'intrados au voisinage du coefficient de portance minimal pour des nombres de Mach inférieurs à 0,5 (figure 2B) et à l'intrados au voisinage du coefficient de portance minimal pour des nombres de Mach supérieurs à 0,5 (figure 2C).

La figure 3 est un diagramme illustrant l'évolution de courbure de l'extrados et de l'intrados d'un profil selon l'invention en fonction de l'abscisse réduite.

La figure 4 est un diagramme illustrant la variation, en fonction de l'abscisse réduite, de l'épaisseur relative de six exemples de profils conformes à la présente invention, respectivement référencés I à VI et présentant des épaisseurs relatives respectives de 9,5%, 10,2%, 11,7%, 12%, 12,8% et 13,9%.

La figure 5 est un diagramme sur lequel sont tracés les lignes moyennes (ou squelettes) des profils I à VI de la figure 4, présentant respectivement des cambrures maximales relatives égales à 3,8%, 3,6%, 2,9%, 2%, 1% et −1,3%.

La figure 6 illustre schématiquement la forme des profils I à VI des figures 4 et 5.

La figure 7 est un diagramme schématique permettant de comparer les six profils I à VI des figures 4 à 6 avec les profils NACA 63 A 209 et NACA 16309 couramment utilisés pour la réalisation d'hélices carénées.

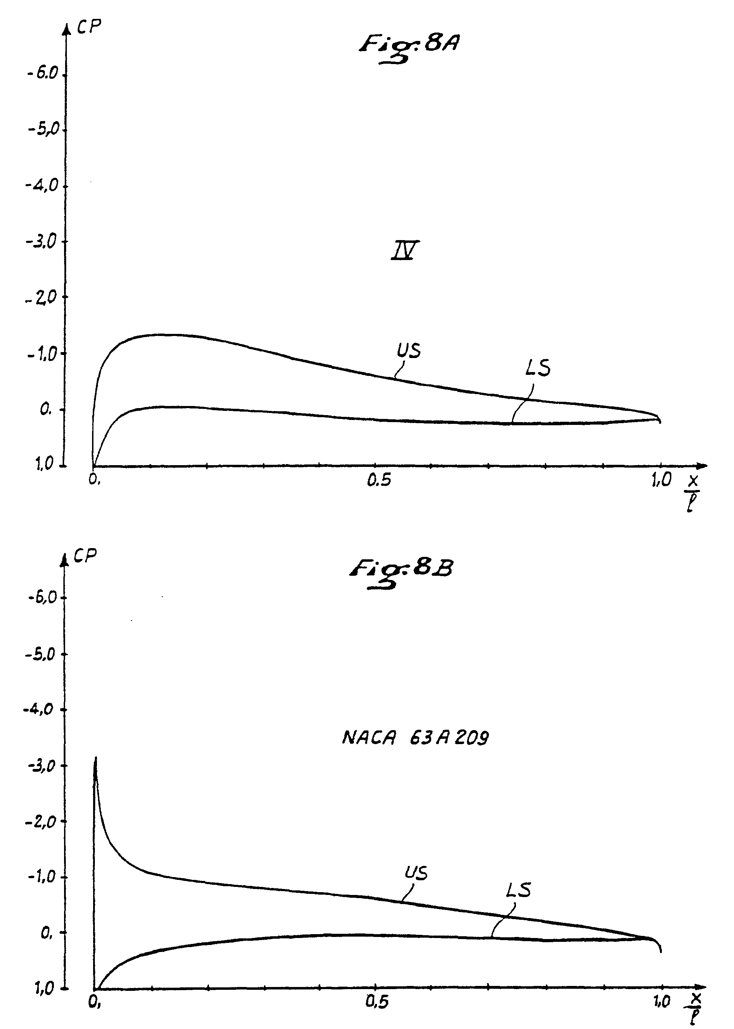

Les figures 8A et 8B sont des diagrammes illustrant respectivement l'évolution, en fonction de l'abscisse réduite, du coefficient de pression Cp à l'extrados (courbes US) et à l'intrados (courbes LS), pour le profil IV de l'invention ayant une épaisseur relative de 12% et pour le profil NACA 63 A 209. Le diagramme de la figure 8A, concernant le profil IV, a été tracé pour un nombre de Mach égal à 0,5 et pour un coefficient de portance égal à 0,773. Le diagramme de la figure 8B, relatif au profil NACA 63 A 209, correspond au même nombre de Mach égal à 0,5 et à un coefficient de portance égal à 0,768.

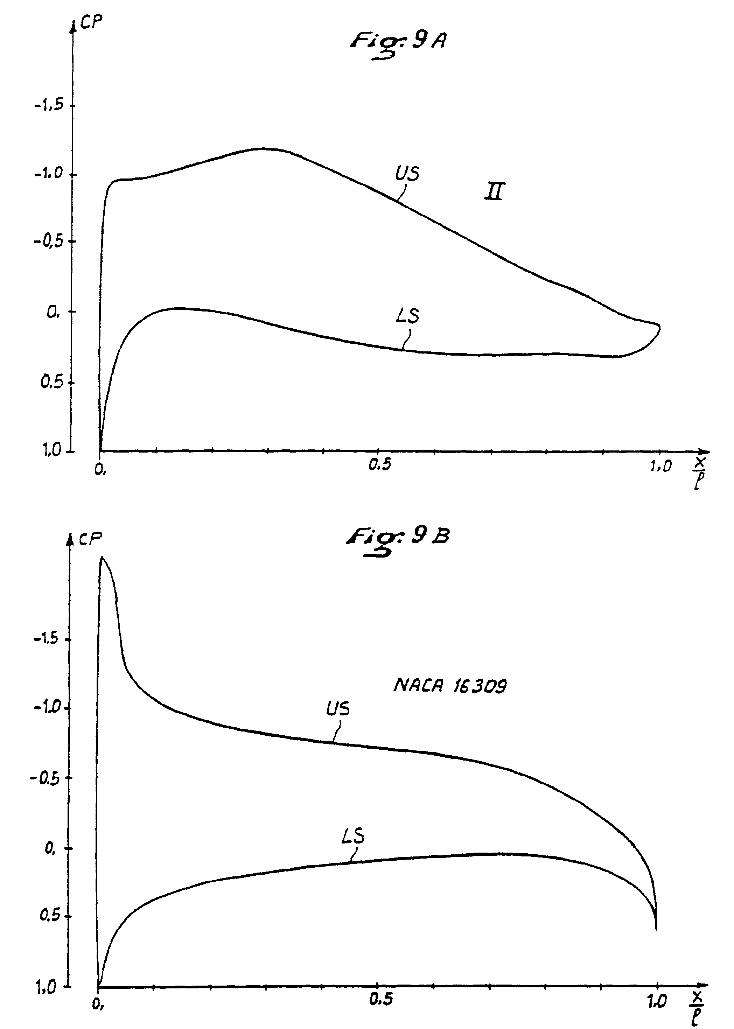

Les figures 9A et 9B sont des diagrammes illustrant respectivement l'évolution, en fonction de l'abscisse réduite, du coefficient de pression Cp à l'extrados (courbes US) et à l'intrados (courbes LS) pour le profil II de l'invention ayant une épaisseur relative de 10% et pour le profil NACA 16309. Le diagramme de la figure 9A, concernant le profil II, a été tracé pour un nombre de Mach égal à 0,62 et pour un coefficient de portance égal à 0,903. Le diagramme de la figure 9B, relatif au profil NACA 16309, correspond au même nombre de Mach égal à 0,62 et à un coefficient de portance égal à 0,889.

Les figures 10A et 10B correspondent respectivement aux figures 8A et 8B pour de faibles coefficients de portance. Le diagramme de la figure 10A, concernant le profil IV de l'invention, a été tracé pour un nombre de Mach égal à 0,5 et pour un coefficient de portance égal à − 0,259. Le diagramme de la figure 10B, qui correspond au profil NACA 63 A 209, a été tracé pour un nombre de Mach égal à 0,5 et un coefficient de portance égal à − 0,252.

Les figures 11A et 11B correspondent respectivement aux figures 9A et 9B pour de faibles valeurs du coefficient de portance. La figure 11A, relative au profil II de l'invention, a été tracée pour un nombre de Mach et un coefficient de portance respectivement égaux à 0,62 et − 0,063. La figure 11B, qui concerne le profil NACA 16 309, a été tracée pour le même nombre de Mach égal à 0,62 et pour un coefficient de portance égal à − 0,052.

La figure 12 représente l'évolution du coefficient de trainée Cx en fonction du coefficient de portance Cz, à un nombre de Mach égal à 0,5, pour le profil IV de l'invention et pour le profil NACA 63A 209.

La figure 13 représente l'évolution du coefficient de trainée Cx en fonction du coefficient de portance Cz, à un nombre de Mach égal à 0,62, pour le profil II de l'invention et pour le profil NACA 16309.

Les figures 14 et 15 illustrent les évolutions du coefficient de portance maximal en fonction du nombre de Mach, respectivement pour le profil IV et pour le profil NACA 63 A 209 (figure 14) et pour le profil II et pour le profil NACA 16309 (figure 15).

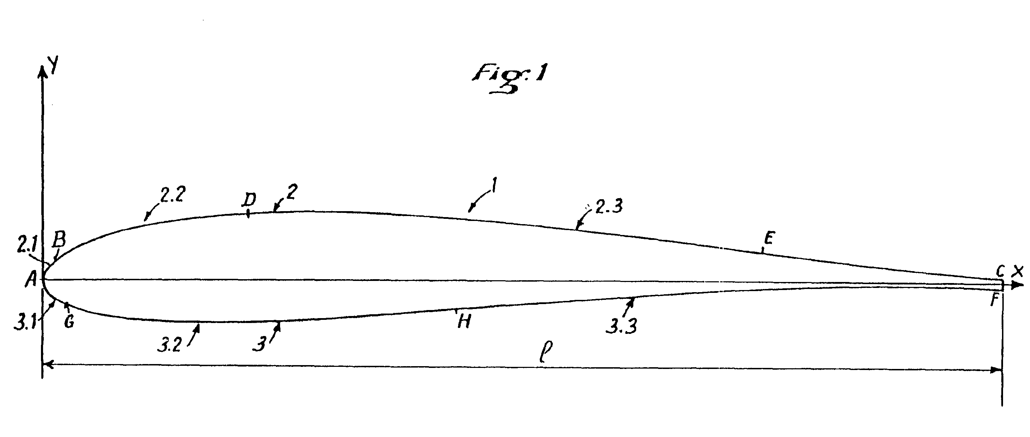

Le profil 1, conforme à l'invention et montré schématiquement sur la figure 1, comporte une ligne d'extrados 2 et une ligne d'intrados 3, la ligne d'extrados 2 s'étendant du bord d'attaque A au bord supérieur C du bord de fuite, tandis que la ligne d'intrados 3 s'étend dudit bord d'attaque A au bord inférieur F du bord de fuite. Le segment CF constitue un culot de bord de fuite, dont l'épaisseur est voisine de 1% de la longueur l de la corde du profil 1.

Sur la figure 1, on a tracé un système d'axes orthogonaux AX, AY, ayant comme origine le bord d'attaque A. L'axe AX est confondu avec la corde du profil 1 et est orienté positivement du bord d'attaque vers le bord de fuite. L'axe AY est orienté positivement de l'intrados 3 vers l'extrados 2. Sur ces axes AX et AY sont portées des coordonnées réduites, c'est-à-dire que les abscisses X et les ordonnées Y sont rapportées à la longueur l de la corde du profil 1.

La ligne d'extrados 2 qui débute au bord d'attaque A, comporte :
— une première portion 2.1 s'étendant du point A jusqu'à un point B situé à une abscisse approximativement égale à 1% de la longueur l de ladite corde ;
— une deuxième portion 2.2 s'étendant du point B jusqu'à un point D situé à une abscisse approximativement égale à 25% de la longueur l de ladite corde ; et
— une troisième portion 2.3 s'étendant du point D jusqu'au point C du bord de fuite, cette portion 2.3 pouvant comporter un point E situé entre 45% et 85% de la longueur l de la corde et auquel la courbure de l'extrados s'annule.

Par ailleurs, la ligne d'intrados 3, qui débute également au bord d'attaque A, comporte :
— une première portion 3.1 s'étendant du point A jusqu'à un point G situé à une abscisse approximativement égale à 2% de la longueur l de ladite corde ;
— une deuxième portion 3.2 s'étendant du point G jusqu'à un point H, situé à une abscisse comprise entre 30% et 70% de ladite corde et auquel la courbure s'annule ; et
— une troisième portion 3.3 s'étendant du point H jusqu'au point F du bord de fuite.

Le profil 1 de la figure 1 a une épaisseur relative, c'est-à-dire rapportée à la longueur l de la corde, comprise entre 9% et 15%.

La courbure CO du profil 1 est maximale au bord d'attaque A. Si on appelle COA cette courbure maximale au bord d'attaque et si on rapporte cette courbure à la longueur l de la corde, selon une particularité de l'invention, la courbure maximale COA est donnée par la formule

$$COA = \frac{\ell}{RA} = a1(e/l) + a2(e/l)^2 + a3(e/l)^3 + a4(e/l)^4 + a5(e/l)^5, \quad (1)$$

expression dans laquelle
e/l = épaisseur relative maximale du profil 1,

l = longueur de la corde,

RA = rayon de courbure au bord d'attaque A, ce rayon RA étant minimal en ce point,

a1, a2, a3, a4 et a5 étant des coefficients constants.

Dans un mode avantageux de réalisation, ces coefficients constants ont respectivement les valeurs suivantes :

$a1 = - 0,2936.10^6$

$a2 = + 0,99839.10^7$

$a3 = - 0,12551.10^9$

$a4 = + 0,69412.10^9$

$a5 = - 0,14276.10^{10}$

Dans ladite première portion 2.1 de la ligne d'extrados 2, la courbure décroît rapidement de cette valeur maximale COA au bord d'attaque A à une valeur voisine de 20 au point B (abscisse de l'ordre de 1%). Ensuite, dans la deuxième portion 2.2 de la ligne d'extrados 2, la courbure décroît beaucoup plus lentement de la valeur approximativement égale à 20 au point B jusqu'à une valeur voisine de 1 au point D (abscisse de l'ordre de 25%).

Avantageusement, l'évolution de la courbure CO le long de cette deuxième portion 2.2 de ligne d'extrados est conforme à la formule

$$CO^{\frac{1}{2}} = a6 + a7 \ (X/l)^{\frac{1}{2}} + a8 \ (X/l), \quad (2)$$

dans laquelle a6, a7 et a8 sont des coefficients constants. Dans un exemple de réalisation, ces coefficients ont les valeurs suivantes :

$a6 = + 0,72957.10$

$a7 = - 0,31509.10^2$

$a8 = + 0,37217.10^2$

Dans la troisième portion 2.3 de la ligne d'extrados 2, la courbure CO est inférieure à 1 entre les points D et C. Notamment pour les faibles valeurs du coefficient de portance d'adaptation Cza (Cza < 0,3), cette troisième portion d'extrados 2.3 peut comporter une inversion de courbure au point E. Dans ce cas, l'abscisse réduite XE/l du point d'inversion de courbure E est donnée par exemple par l'expression

$$XE/l = 0,58333 + 0,91667 \ Cza - 1,1667 \ (Cza)^2 \quad (3)$$

Dans tous les cas, XE/l est compris entre 45% et 85% de la longueur de la corde l.

La distribution particulière, décrite ci-dessus, des courbures à l'extrados 2 des profils de la famille conforme à l'invention dans les trois portions 2.1, 2.2 et 2.3 précédemment définies permet d'obtenir conjointement de très faibles valeurs de trainée au coefficient de portance d'adaptation et des valeurs remarquables du coefficient de portance maximal.

Ainsi, l'évolution des courbures dans la première portion 2.1 d'extrados permet de limiter les survitesses au voisinage du bord d'attaque A, pour les portances supérieures à la portance d'adaptation, alors que les évolutions de courbure dans la deuxième portion 2.2 permettent d'éviter la formation de choc fort pour une large gamme de coefficients de portance au delà du coefficient de portance d'adaptation et par conséquent d'obtenir une large plage de coefficients de portance à faible coefficient de trainée Cx. L'évolution des courbures dans la troisième portion 2.3 d'extrados permet un contrôle remarquable des recompressions dans cette zone, notamment pour les faibles valeurs du nombre de Reynolds d'utilisation limitant ainsi l'épaississement de la couche limite et retardant l'apparition du décollement. De plus, cette évolution des courbures conduit à une remontée du point de décollement vers le bord d'attaque, qui est peu rapide avec l'incidence, ce qui assure au profil une plage d'incidences utilisables étendue au delà de l'incidence d'adaptation.

Par ailleurs, selon d'autres particularités des profils conformes à la présente invention :

— dans la première portion 3.1 d'intrados, la courbure décroît de la valeur maximale COA au bord d'attaque A jusqu'à une valeur voisine de 11 au point G ;

— dans la deuxième portion 3.2 d'intrados, l'abscisse réduite du point de courbure nulle est donnée par la formule

$$X/l = a9(e/l) + a10(e/l)^2 + a11(e/l)^3 + a12(e/l)^4 + a13(e/l)^5 \quad (4)$$

avec

$a9 = - 0,39176.10^3$

$a10 = + 0,13407.10^5$

EP 0 327 435 B1

$a11 = - 0,16845.10^6$

$a12 = + 0,92807.10^6$

$a13 = - 0,18878.10^7$

— dans la troisième portion 3.3 d'intrados, la courbure reste négative et inférieure en valeur absolue à 1.

Grâce à de telles variations de courbure à l'intrados, le profil selon l'invention présente de très bonnes performances pour des valeurs du coefficient de portance inférieures au coefficient de portance d'adaptation, c'est-à-dire de faibles niveaux de trainée et de faibles valeurs du coefficient de portance minimal. En effet, l'évolution de courbure dans la première portion d'intrados 3.1 permet de limiter les survitesses au voisinage du bord d'attaque, alors que l'évolution de courbure dans la deuxième portion 3.2 permet pour les nombres de Mach d'adaptation inférieurs à 0,5, d'obtenir des recompressions progressives de l'écoulement évitant le décollement de la couche limite pour des faibles valeurs du coefficient de portance et évite dans les mêmes conditions, pour des nombres de Mach d'adaptation supérieurs à 0,5, la formation d'onde de choc intense. On rappelle que le Mach d'adaptation est le nombre de Mach auquel doit travailler un profil et pour lequel il est défini. Comme pour l'extrados, la troisième portion d'intrados 3.3 permet pour les faibles nombres de Reynolds d'utilisation d'éviter l'apparition d'un décollement de bord de fuite pour une large plage de valeurs de coefficient de portance inférieures au coefficient de portance d'adaptation. Ainsi les profils selon l'invention possèdent de remarquables valeurs du coefficient de portance minimal et la plage des coefficients de portance de bon fonctionnement en deçà du coefficient de portance d'adaptation est élevée.

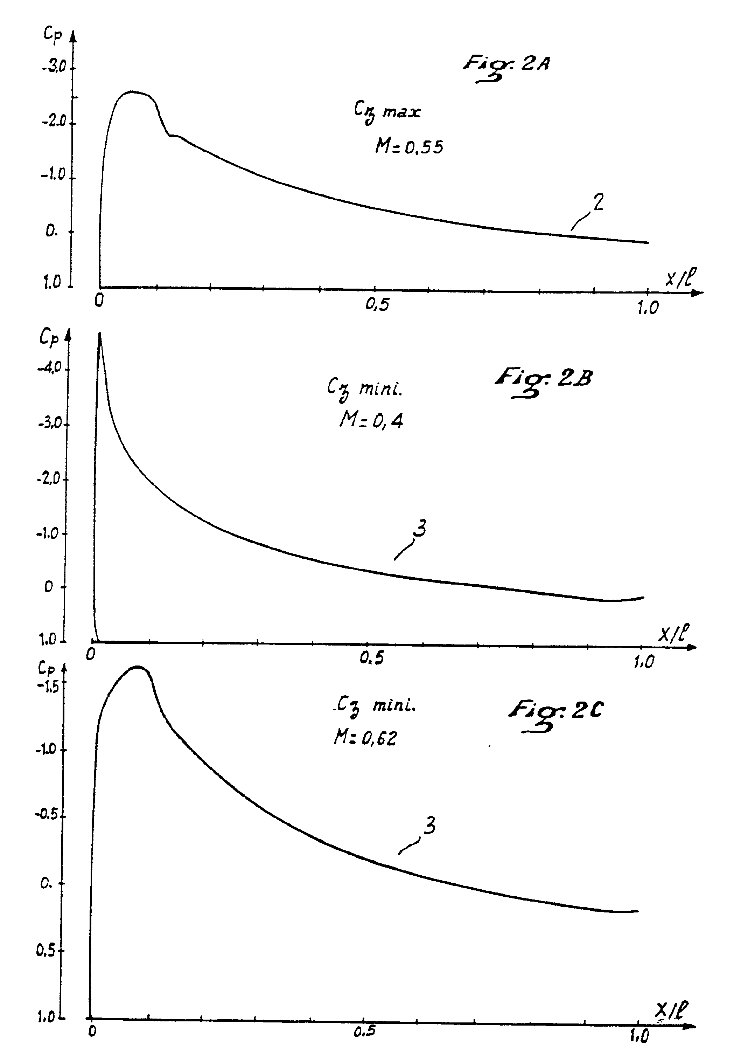

Ces performances, notamment aux coefficients de portance maximal et minimal, sont illustrées par les figures 2A, 2B et 2C qui montrent que les profils selon l'invention présentent des répartitions de pressions caractéristiques au voisinage des valeurs Cz max et Cz mini du coefficient de portance.

Au voisinage de Cz max et pour un nombre de Mach de fonctionnement moyen, la distribution du coefficient de pression Cp à l'extrados des profils selon l'invention présente l'allure particulière montrée par la figure 2A.

Pour un nombre de Mach à l'infini amont de 0,55, il existe, à l'extrados des profils, une montée régulière de la ligne de survitesse jusqu'à une valeur du coefficient de pression voisine de – 2,5. Cette montée est suivie d'un court plateau terminé par un choc d'intensité modérée, situé avant 20% de la corde des profils. L'intensité de ce choc reste modérée compte tenu des niveaux de élevés de coefficient de portance qui sont atteints. La ligne de recompression qui suit le choc est une ligne régulière et concave dont la concavité diminue progressivement vers le bord de fuite. L'évolution appropriée de cette ligne de recompression limite l'épaississement de la couche limite et retarde l'apparition du décollement, en particulier aux faibles nombres de Reynolds.

Pour les niveaux de coefficient de portance nettement inférieurs au coefficient de portance d'adaptation et voisins de Cz mini, les répartitions de pression présentées par les profils selon l'invention se divisent en deux types caractéristiques selon que le nombre de Mach de fonctionnement est supérieur ou inférieur à 0,5. Ces deux types d'écoulement caractéristiques sont montrés respectivement par les figures 2B et 2C.

Pour les nombres de Mach de fonctionnement inférieurs à 0,5 (voir la figure 2B), il existe à l'intrados des profils selon l'invention une montée rapide de la ligne de survitesse. Le niveau de cette survitesse reste modéré pour ces faibles valeurs de coefficient de portance. Cette survitesse est suivie d'une ligne de recompression régulière et concave jusqu'au bord de fuite, qui évite le décollement de la couche limite et permet donc d'atteindre des valeurs remarquables pour Cz mini.

Pour les nombres de Mach de fonctionnement supérieurs à 0,5 (voir la figure 2C), l'écoulement à l'intrados des profils selon l'invention se caractérise au voisinage du Cz mini par une zone de survitesse d'intensité réduite, limitée par un choc situé à environ 10% de la corde des profils. L'intensité du choc reste modérée même aux faibles niveaux de coefficients de portance atteints. La ligne de recompression qui suit le choc est régulière et concave ; elle conduit à de faibles gradients de pression au voisinage du bord de fuite qui permettent d'éviter le décollement précoce de la couche limite aux faibles nombres de Reynolds.

Ces caractéristiques d'écoulement avantageuses, permettant d'obtenir les très bonnes performances visées, sont dues aux spécifications géométriques des profils selon l'invention établies ci-dessus et en particulier aux évolutions de courbure préconisées.

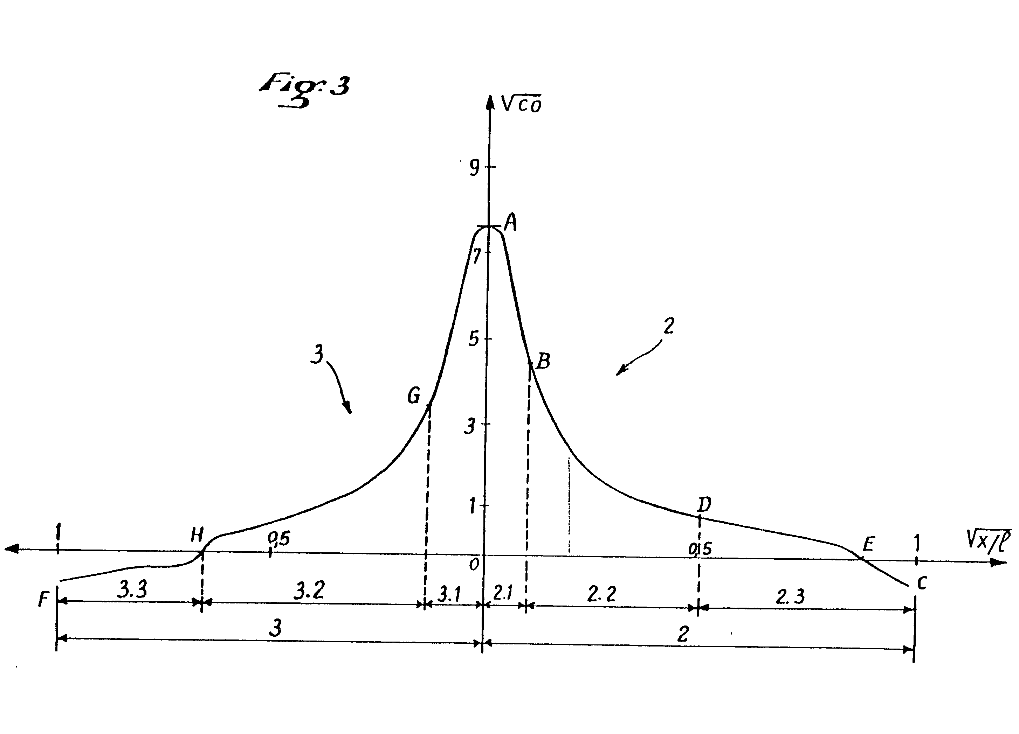

La figure 3 illustre les évolutions de courbure à l'extrados et à l'intrados d'un exemple de profil selon l'invention. Pour des raisons de clarté, on a tracé les évolutions de la racine carrée de la courbure CO en fonction de la racine carrée de l'abscisse réduite X/l et l'intrados du profil a été tracé de 0 à – 1.

Comme le montre la figure 3, la courbure à l'extrados 2 est maximale au bord d'attaque A. Dans la portion d'extrados 2.1 qui s'étend du bord d'attaque A au point B situé à environ 1% de la corde, la courbure décroît jusqu'à une valeur égale à environ 20. Cette première portion 2.1 est suivie d'une deuxième 2.2 s'étendant du point B au point D situé à environ 25% de la corde, dans laquelle la courbure décroît jusqu'à une valeur égale à 1. Cette deuxième portion 2.2 est suivie de la troisième portion d'extrados 2.3, dans laquelle la courbure reste en valeur absolue inférieure à 1. Cette portion 2.3 peut comporter un point d'inversion de courbure E pour les profils selon l'invention dont les coefficients de portance d'adaptation sont inférieurs à 0,3.

7

De même, la figure 3 illustre que la courbure à l'intrados 3, maximale au bord d'attaque A, décroît rapidement dans la première portion 3.1 jusqu'à une valeur environ égale à 11 au point G situé approximativement à une distance égale à 2% de la corde à partir du point A. Cette première portion 3.1 est suivie de la deuxième 3.2 s'étendant du point G jusqu'au point H situé entre 30 et 70% de la corde et dans laquelle la courbure décroît depuis la valeur 11 au point G jusqu'à une valeur nulle au point H.

Cette deuxième portion 3.2 est suivie d'une troisième portion 3.3 s'étendant du point H précédemment défini jusqu'au bord de fuite F et dans laquelle la courbure reste en valeur absolue inférieure à 1.

Pour définir et engendrer facilement un profil de la famille conforme à l'invention, on peut mettre en oeuvre une loi de variation d'épaisseur et une loi de variation de cambrure le long de la corde du profil, conformément à la technique définie à la page 112 du rapport "Theory of wing sections" de H. ABOTT et E. VON DOENHOFF publié en 1949 par Mc GRAW HILL BOOK Company, Inc.

Selon cette technique les coordonnées d'un profil sont obtenues en reportant de part et d'autre de la ligne moyenne, ou squelette, et perpendiculairement à celle-ci, la demi épaisseur en ce point.

A cette fin, on utilise avantageusement les formules analytiques suivantes pour la ligne moyenne et la loi d'épaisseur :

— pour la ligne moyenne ou squelette :

$$Y/l = c1(X/l) + c2(X/l)^2 + c3(X/l)^3 + c4(X/l)^4 + c5(X/l)^5 + c6(X/l)^6 + c7(X/l)^7 \quad (5)$$

— pour la loi d'épaisseur :

$$(6) \quad Ye/l = b1(X/l) + b2(X/l)^2 + b3(X/l)^3 + b4(X/l)^4 + b5(X/l)^5$$
$$+ b6(X/l)^6 + b7(X/l)^7 + b8(X/l)^8 + b9(X/l)^9 + b10(X/l)^{10}$$

Pour les profils selon l'invention dont l'épaisseur relative est comprise entre 9% et 15%, chaque coefficient b1 à b10 de la formule (6) peut être avantageusement défini par la formule (7.1) à (7.10) correspondante, donnée ci-après :

$$b1 = b11(e/l) + b12(e/l)^2 + b13(e/l)^3 + b14(e/l)^4 + b15(e/l)^5 + b16(e/l)^6 \quad (7.1)$$
$$b2 = b21(e/l) + b22(e/l)^2 + b23(e/l)^3 + b24(e/l)^4 + b25(e/l)^5 + b26(e/l)^6 \quad (7.2)$$
$$b10 = b101(e/l) + b102(e/l)^2 + b103(e/l)^3 + b104(e/l)^4 + b105(e/l)^5 + b106(e/l)^6 \quad (7.10)$$

Les différents coefficients b11 à b106 ont alors les valeurs suivantes :

$$b11 = +0,98542.10^5 \qquad b61 = -0,18709.10^{10}$$
$$b12 = -0,43028.10^7 \qquad b62 = +0,82093.10^{11}$$
$$b13 = +0,74825.10^8 \qquad b63 = -0,14340.10^{13}$$
$$b14 = -0,64769.10^9 \qquad b64 = +0,12464.10^{14}$$
$$b15 = +0,27908.10^{10} \qquad b65 = -0,53912.10^{14}$$
$$b16 = -0,47889.10^{10} \qquad b66 = +0,92831.10^{14}$$

$b21 = -0,33352.10^7$

$b22 = +0,14610.10^9$

$b23 = -0,25480.10^{10}$

$b24 = +0,22115.10^{11}$

$b25 = -0,95525.10^{11}$

$b26 = +0,16428.10^{12}$

$b31 = +0,39832.10^8$

$b32 = -0,17465.10^{10}$

$b33 = +0,30488.10^{11}$

$b34 = -0,26484.10^{12}$

$b35 = +0,11449.10^{13}$

$b36 = -0,19704.10^{13}$

$b41 = -0,24305.10^9$

$b42 = +0,10661.10^{11}$

$b43 = -0,18618.10^{12}$

$b44 = +0,16178.10^{13}$

$b45 = -0,69957.10^{13}$

$b46 = +0,12043.10^{14}$

$b51 = +0,86049.10^9$

$b52 = -0,37753.10^{11}$

$b53 = +0,65939.10^{12}$

$b54 = -0,57309.10^{13}$

$b55 = +0,24785.10^{14}$

$b56 = -0,42674.10^{14}$

$b71 = +0,25348.10^{10}$

$b72 = -0,11123.10^{12}$

$b73 = +0,19432.10^{13}$

$b74 = -0,16892.10^{14}$

$b75 = +0,73066.10^{14}$

$b76 = -0,12582.10^{15}$

$b81 = -0,20869.10^{10}$

$b82 = +0,91583.10^{11}$

$b83 = -0,16000.10^{13}$

$b84 = +0,13909.10^{14}$

$b85 = -0,60166.10^{14}$

$b86 = +0,10361.10^{15}$

$b91 = +0,95554.10^9$

$b92 = -0,41936.10^{11}$

$b93 = +0,73266.10^{12}$

$b94 = -0,63693.10^{13}$

$b95 = +0,27553.10^{14}$

$b96 = -0,47450.10^{14}$

$b101 = -0,18663.10^9$

$b102 = +0,81909.10^{10}$

$b103 = -0,14311.10^{12}$

$b104 = +0,12441.10^{13}$

$b105 = -0,58321.10^{13}$

$b106 = +0,92688.10^{13}$

De même, pour des cambrures relatives maximales de squelette comprises entre –2% et +5% de la corde, chaque coefficient c1 à c7 de la formule (5) donnant l'allure du squelette peut être avantageusement défini par la formule (8.1) à (8.7) correspondante, donnée ci-après :

$$c1 = c11(e/l) + c12(e/l)^2 + c13(e/l)^3 + c14(e/l)^4 + c15(e/l)^5 + c16(e/l)^6 \quad (8.1)$$
$$c2 = c21(e/l) + c22(e/l)^2 + c23(e/l)^3 + c24(e/l)^4 + c25(e/l)^5 + c26(e/l)^6 \quad (8.2)$$
$$c7 = c71(e/l) + c72(e/l)^2 + c73(e/l)^3 + c74(e/l)^4 + c75(e/l)^5 + c76(e/l)^6 \quad (8.7)$$

Les différents coefficients c11 à c76 présentent avantageusement les valeurs suivantes :

$$c11 = -0,29874.10^1 \qquad c51 = -0,18750.10^4$$

$$c12 = -0,61332.10^2 \qquad c52 = +0,72410.10^5$$

$$c13 = +0,60890.10^5 \qquad c53 = +0,90745.10^7$$

$$c14 = -0,43208.10^6 \qquad c54 = -0,54687.10^9$$

$$c15 = -0,12037.10^9 \qquad c55 = +0,58423.10^{10}$$

$$c16 = +0,24680.10^{10} \qquad c56 = +0,50242.10^{11}$$

$$c21 = +0,17666.10^2 \qquad c61 = +0,12366.10^4$$

$$c22 = +0,70530.10^4 \qquad c62 = -0,43178.10^5$$

$$c23 = -0,40637.10^6 \qquad c63 = -0,61307.10^7$$

$$c24 = -0,28310.10^8 \qquad c64 = +0,33946.10^9$$

$$c25 = +0,20813.10^{10} \qquad c65 = -0,26651.10^{10}$$

$$c26 = -0,31463.10^{11} \qquad c66 = -0,49209.10^{11}$$

$$c31 = -0,38189.10^3 \qquad c71 = -0,31247.10^3$$

$$c32 = +0,31787.10^2 \qquad c72 = +0,83939.10^4$$

$$c33 = +0,23684.10^4 \qquad c73 = +0,16280.10^7$$

$$c34 = -0,47636.10^8 \qquad c74 = -0,74431.10^8$$

$$c35 = -0,26705.10^{10} \qquad c75 = +0,30520.10^6$$

$$c36 = +0,65378.10^{11} \qquad c76 = +0,21265.10^{11}$$

$$c41 = +0,13180.10^4$$

$$c42 = -0,44650.10^5$$

$$c43 = -0,65945.10^{7.}$$

$$c44 = +0,35822.10^9$$

$$c45 = -0,24986.10^{10}$$

$$c46 = -0,58675.10^{11}$$

Les formules analytiques ci-dessus permettent de restituer les nombreuses caractéristiques géométriques particulières des profils selon l'invention. Elles permettent également, une fois choisie l'évolution de la loi d'épaisseur en fonction de l'envergure de la pale, loi qui est choisie par des considérations de résistance structurale, de définir la géométrie de la pale complète, l'évolution de la cambrure maximale avec l'envergure étant définie selon l'application visée.

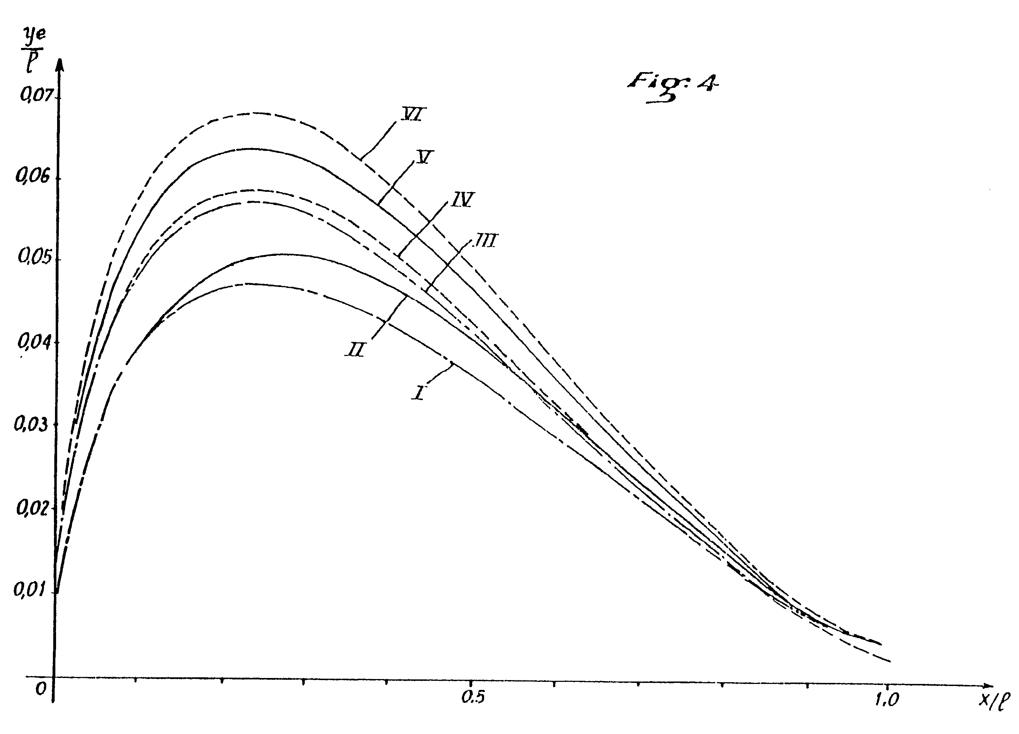

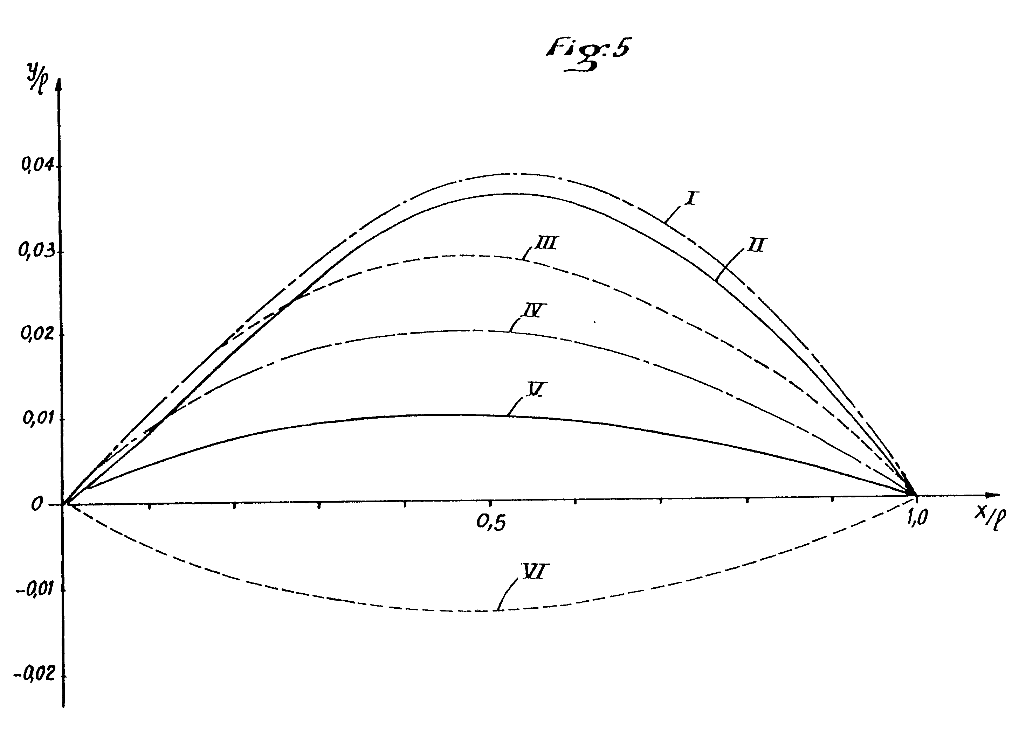

A titre d'exemple, sur la figure 4, on a représenté les lois d'épaisseur de six profils selon l'invention, respectivement référencés I à VI, ayant respectivement des épaisseurs relatives maximales de 9,5%, 10,2%, 11,7%, 12%, 12,8% et 13,9%. Sur la figure 5, également à titre d'exemple, on a tracé les squelettes des profils I à VI définis ci-dessus, respectivement pour des cambrures maximales égales à +3,8%, +3,6%, +2,9%, +2%, +1% et −1,3%.

La cambrure relative maximale Kmax du squelette des profils conformes à l'invention est avantageusement déterminée, en fonction de la valeur du coefficient de portance d'adaptation Cza, par la formule suivante :

$$Kmax = d1(Cza) + d2(Cza)^2 + d3(Cza)^3 + d4(Cza)^4 + d5(Cza)^5 + d6(Cza)^6 \quad (9)$$

dans laquelle d1 à d6 sont des coefficients constants.

Dans un mode avantageux de réalisation, les coefficients constants d1 à d6 ont les valeurs suivantes :
d1 = + 0,11017
d2 = − 0,30167
d3 = − 0,58541
d4 = + 0,39240.10
d5 = − 0,53223.10
d6 = + 0,22132.10

Ainsi, en reportant de part et d'autre du squelette (donné par la figure 5) la loi d'épaisseurs (donnée par la figure 4), on peut tracer l'extrados et l'intrados d'un profil conforme à l'invention.

Toutefois, les profils conformes à la présente invention peuvent être définis par des équations donnant, dans le système d'axes rectangulaires AX, AY, les ordonnées réduites Y/l en fonction des abscisses réduites X/l. On donne ci-après plusieurs exemples, correspondant respectivement aux profils I à VI définis ci-dessus.

EXEMPLE I – Profil I ayant une épaisseur maximale relative égale à 9,5%, pour un coefficient de portance d'adaptation égal à 1.

Dans ce cas, le profil I est tel que :
— les ordonnées réduites de la ligne d'extrados sont données
• entre X/l = 0 et X/l = 0,39433, par la formule

$$Y/l = f1(X/l)^{\frac{1}{2}} + f2(X/l) + f3(X/l)^2 + f4(X/l)^3 + f5(X/l)^4 + f6(X/l)^5 + f7(X/l)^6 \quad (10)$$

avec
f1 = + 0,16227
f2 = − 0,11704.10⁻¹
f3 = + 0,13247
f4 = − 0,25016.10
f5 = + 0,10682.10²

11

f6 = − 0,22210.10$^2$
f7 = + 0,17726.10$^2$
• entre X/l = 0,39433 et X/l = 1, par la formule

$$Y/l = g0 + g1(X/l) + g2(X/l)^2 + g3(X/l)^3 + g4(X/l)^4 + g5(X/l)^5 + g6(X/l)^6 \quad (11)$$

avec
g0 = + 0,22968
g1 = − 0,17403.10
g2 = + 0,77952.10
g3 = − 0,17457.10$^2$
g4 = + 0,20845.10$^2$
g5 = − 0,13004.10$^2$
g6 = + 0,33371.10

— alors que les ordonnées réduites de la ligne d'intrados dudit profil sont données
• entre X/l = 0 et X/l = 0,11862, par la formule

$$Y/l = h1(X/l)^{\frac{1}{2}} + h2(X/l) + h3(X/l)^2 + h4(X/l)^3 + h5(X/l)^4 + h6(X/l)^5 + h7(X/l)^6 \quad (12)$$

avec
h1 = − 0,13971
h2 = + 0,10480.10$^{-3}$
h3 = + 0,51698.10
h4 = − 0,11297.10$^3$
h5 = + 0,14695.10$^4$
h6 = − 0,96403.10$^4$
h7 = + 0,24769.10$^5$
• entre X/l = 0,11862 et X/l = 1, par la formule

$$Y/l = i0 + i1(X/l) + i2(X/l)^2 + i3(X/l)^3 + i4(X/l)^4 + i5(X/l)^5 + i6(X/l)^6 \quad (13)$$

avec
i0 = − 0,25915.10$^{-1}$
i1 = − 0,96597.10$^{-1}$
i2 = + 0,49503
i3 = + 0,60418.10$^{-1}$
i4 = − 0,17206.10
i5 = + 0,20619.10
i6 = − 0,77922

EXEMPLE II – Profil II ayant une épaisseur maximale relative égale à 10,2%, pour un coefficient de portance d'adaptation égal à 0,9.

Pour ce profil II :
— les ordonnées réduites de la ligne d'extrados sont données
• entre X/l = 0 et X/l = 0,39503, par la formule

$$Y/l = j1(X/l)^{\frac{1}{2}} + j2(X/l) + j3(X/l)^2 + j4(X/l)^3 + j5(X/l)^4 + j6(X/l)^5 + j7(X/l)^6 \quad (14)$$

avec
j1 = + 0,14683
j2 = − 0,67115.10$^{-2}$
j3 = + 0,44720
j4 = − 0,36828.10
j5 = + 0,12651.10$^2$
j6 = − 0,23835.10$^2$
j7 = + 0,18155.10$^2$
• entre X/l = 0,39503 et X/l = 1, par la formule

$$Y/l = k0 + k1(X/l) + k2(X/l)^2 + k3(X/l)^3 + k4(X/l)^4 + k5(X/l)^5 + k6(X/l)^6 \quad (15)$$

avec

$k0 = + 0,45955$

$k1 = - 0,39834.10$

$k2 = + 0,16726.10^2$

$k3 = - 0,35737.10^2$

$k4 = + 0,41088.10^2$

$k5 = - 0,24557.10^2$

$k6 = + 0,60088.10$

— alors que les ordonnées réduites de la ligne d'intrados dudit profil sont données

● entre $X/l = 0$ et $X/l = 0,14473$, par la formule

$$Y/l = m1(X/l)^{\frac{1}{2}} + m2(X/l) + m3(X/l)^2 + m4(X/l)^3 + m5(X/l)^4 + m6(X/l)^5 + m7(X/l)^6 \quad (16)$$

avec

$m1 = - 0,13297$

$m2 = + 0,36163.10^{-1}$

$m3 = + 0,17284.10$

$m4 = - 0,27664.10^2$

$m5 = + 0,30633.10^3$

$m6 = - 0,16978.10^4$

$m7 = + 0,36477.10^4$

● entre $X/l = 0,14473$ et $X/l = 1$, par la formule

$$Y/l = n0 + n1(X/l) + n2(X/l)^2 + n3(X/l)^3 + n4(X/l)^4 + n5(X/l)^5 + n6(X/l)^6 \quad (17)$$

avec

$n0 = - 0,30824.10^{-1}$

$n1 = - 0,20564.10^{-1}$

$n2 = - 0,21738$

$n3 = + 0,24105.10$

$n4 = - 0,53752.10$

$n5 = + 0,48110.10$

$n6 = - 0,15826.10$

<u>EXEMPLE III</u> – Profil III ayant une épaisseur maximale relative égale à 11,7%, pour un coefficient de'portance d'adaptation égal à 0,5

Pour ce profil III,

— les ordonnées réduites de la ligne d'extrados sont données

● entre $X/l = 0$ et $X/l = 0,28515$, par la formule

$$Y/l = t1(X/l)^{\frac{1}{2}} + t2(X/l) + t3(X/l)^2 + t4(X/l)^3 + t5(X/l)^4 + t6(X/l)^5 + t7(X/l)^6 \quad (18)$$

avec

$t1 = + 0,21599$

$t2 = - 0,17294$

$t3 = + 0,22044.10$

$t4 = - 0,26595.10^2$

$t5 = + 0,14642.10^3$

$t6 = - 0,39764.10^3$

$t7 = + 0,42259.10^3$

● entre $X/l = 0,28515$ et $X/l = 1$, par la formule

$$Y/l = u0 + u1(X/l) + u2(X/l)^2 + u3(X/l)^3 + u4(X/l)^4 + u5(X/l)^5 + u6(X/l)^6 \quad (19)$$

avec

$u_0 = + 0,39521.10^{-1}$

$u_1 = + 0,26170$

$u_2 = - 0,47274$

$u_3 = - 0,40872$

$u_4 = + 0,15968.10$

$u_5 = - 0,15222.10$

$u_6 = + 0,51057$

— alors que les ordonnées réduites de la ligne d'intrados dudit profil sont données

• entre X/l = 0 et X/l = 0,17428, par la formule

$$Y/l = v_1(X/l)^{\frac{1}{2}} + v_2(X/l) + v_3(X/l)^2 + v_4(X/l)^3 + v_5(X/l)^4 + v_6(X/l)^5 + v_7(X/l)^6 \quad (20)$$

avec

$v_1 = - 0,16526$

$v_2 = - 0,31162.10^{-1}$

$v_3 = + 0,57567.10$

$v_4 = - 0,10148.10^3$

$v_5 = + 0,95843.10^3$

$v_6 = - 0,44161.10^4$

$v_7 = + 0,78519.10^4$

• entre X/l = 0,17428 et X/l = 1, par la formule

$$Y/l = w_0 + w_1(X/l) + w_2(X/l)^2 + w_3(X/l)^3 + w_4(X/l)^4 + w_5(X/l)^5 + w_6(X/l)^6 \quad (21)$$

avec

$w_0 = - 0,25152.10^{-1}$

$w_1 = - 0,22525$

$w_2 = + 0,89038$

$w_3 = - 0,10131.10$

$w_4 = + 0,16240$

$w_5 = + 0,46968$

$w_6 = - 0,26400$

EXEMPLE IV – Profil IV ayant une épaisseur maximale relative égale à 12%, pour un coefficient de portance d'adaptation égal à 0,6

Pour ce profil IV,

— les ordonnées réduites de la ligne d'extrados sont données

• entre X/l = 0 et X/l = 0,29461, par la formule

$$Y/l = p_1(X/l)^{\frac{1}{2}} + p_2(X/l) + p_3(X/l)^2 + p_4(X/l)^3 + p_5(X/l)^4 + p_6(X/l)^5 + p_7(X/l)^6 \quad (22)$$

avec

$p_1 = + 0,16347$

$p_2 = + 0,20845$

$p_3 = - 0,20506.10$

$p_4 = + 0,13223.10^2$

$p_5 = - 0,63791.10^2$

$p_6 = + 0,16200.10^3$

$p_7 = - 0,16302.10^3$

• entre X/l = 0,29461 et X/l = 1, par la formule

$$Y/l = q_0 + 1(X/l) + q_2(X/l)^2 + q_3(X/l)^3 + q_4(X/l)^4 + q_5(X/l)^5 + q_6(X/l)^6 \quad (23)$$

avec

$q_0 = + 0,54860.10^{-1}$

$q_1 = + 0,13872$

q2 = + 0,16460

q3 = − 0,17424.10

q4 = + 0,28085.10

q5 = − 0,19062.10

q6 = + 0,48442

alors que les ordonnées réduites de la ligne d'intrados dudit profil sont données

• entre X/l = 0 et X/l = 0,14931, par la formule

$$Y/l = r1(X/l)^{\frac{1}{2}} + r2(X/l) + r3(X/l)^2 + r4(X/l)^3 + r5(X/l)^4 + r6(X/l)^5 + r7(X/l)^6 \quad (24)$$

avec

r1 = − 0,19086

r2 = + 0,29842

r3 = − 0,51359.10

r4 = + 0,11144.10$^3$

r5 = − 0,11384.10$^4$

r6 = + 0,56797.10$^4$

r7 = − 0,11091.10$^5$

• entre X/l = 0,14931 et X/l = 1, par la formule

$$Y/l = s0 + s1(X/l) + s2(X/l)^2 + s3(X/l)^3 + s4(X/l)^4 + s5(X/l)^5 + s6(X/l)^6 \quad (25)$$

avec

s0 = − 0,31248.10$^{-1}$

s1 = − 0,12350

s2 = + 0,42720

s3 = + 0,32923

s4 = − 0,19650.10

s5 = + 0,21099.10

s6 = − 0,74935

## EXEMPLE V – Profil V ayant une épaisseur maximale relative égale à 12,8% pour un coefficient de portance d'adaptation égal à 0,2

Pour ce profil V,

— les ordonnées réduites de la ligne d'extrados sont données

• entre X/l = 0 et X/l = 0,26861, par la formule

$$Y/l = \alpha1(X/l)^{\frac{1}{2}} + \alpha2(X/l) + \alpha3(X/l)^2 + \alpha4(X/l)^3 + \alpha5(X/l)^4 + \alpha6(X/l)^5 + \alpha7(X/l)^6 \quad (26)$$

avec

$\alpha$1 = + 0,19762

$\alpha$2 = + 0,17213

$\alpha$3 = − 0,53137.10

$\alpha$4 = + 0,56025.10$^2$

$\alpha$5 = − 0,32319.10$^3$

$\alpha$6 = + 0,92088.10$^3$

$\alpha$7 = − 0,10229.10$^4$

• entre X/l = 0,26861 et X/l = 1, par la formule

$$Y/l = \beta0 + \beta1(X/l) + \beta2(X/l)^2 + \beta3(X/l)^3 + \beta4(X/l)^4 + \beta5(X/l)^5 + \beta6(X/l)^6 \quad (27)$$

avec

$\beta$0 = + 0,28900.10$^{-1}$

$\beta$1 = + 0,38869

$\beta$2 = − 0,10796.10

$\beta$3 = + 0,80848

15

EP 0 327 435 B1

$\beta 4 = + 0,45025$
$\beta 5 = - 0,10636.10$
$\beta 6 = + 0,47182$
— alors que les ordonnées réduites de la ligne d'intrados dudit profil sont données
• entre $X/l = 0$ et $X/l = 0,20934$, par la formule

$$Y/l = \gamma 1(X/l)^{\frac{1}{2}} + \gamma 2(X/l) + \gamma 3(X/l)^2 + \gamma 4(X/l)^3 + \gamma 5(X/l)^4 + \gamma 6(X/l)^5 + \gamma 7(X/l)^6 \quad (28)$$

avec
$\gamma 1 = - 0,25376$
$\gamma 2 = + 0,61860$
$\gamma 3 = - 0,96212.10$
$\gamma 4 = + 0,12843.10^3$
$\gamma 5 = - 0,90701.10^3$
$\gamma 6 = + 0,32291.10^4$
$\gamma 7 = - 0,45418.10^4$
• entre $X/l = 0,20934$ et $X/l = 1$, par la formule

$$Y/l = \delta 0 + \delta 1(X/l) + \delta 2(X/l)^2 + \delta 3(X/l)^3 + \delta 4(X/l)^4 + \delta 5(X/l)^5 + \delta 6(X/l)^6 \quad (29)$$

avec
$\delta 0 = - 0,25234.10^{-1}$
$\delta 1 = - 0,32905$
$\delta 2 = + 0,10890.10$
$\delta 3 = - 0,10066.10$
$\delta 4 = - 0,32520$
$\delta 5 = + 0,11325.10$
$\delta 6 = - 0,54043$

EXEMPLE VI – Profil VI ayant une épaisseur maximale relative égale à 13,9%, pour un coefficient de portance d'adaptation égal à – 0,1

Pour ce profil VI,
— les ordonnées réduites de la ligne d'extrados sont données
• entre $X/l = 0$ et $X/l = 0,19606$, par la formule

$$Y/l = \varepsilon 1(X/l)^{\frac{1}{2}} + 2(X/l) + \varepsilon 3(X/l)^2 + \varepsilon 4(X/l)^3 + \varepsilon 5(X/l)^4 + \varepsilon 6(X/l)^5 + \varepsilon 7(X/l)^6 \quad (30)$$

avec
$\varepsilon 1 = + 0,22917$
$\varepsilon 2 = - 0,22972$
$\varepsilon 3 = + 0,21262.10$
$\varepsilon 4 = - 0,39557.10^2$
$\varepsilon 5 = + 0,32628.10^3$
$\varepsilon 6 = - 0,13077.10^4$
$\varepsilon 7 = + 0,20370.10^4$
• entre $X/l = 0,19606$ et $X/l = 1$, par la formule

$$Y/l = \lambda 0 + \lambda 1(X/l) + \lambda 2(X/l)^2 + \lambda 3(X/l)^3 + \lambda 4(X/l)^4 + \lambda 5(X/l)^5 + \lambda 6(X/l)^6 \quad (31)$$

avec
$\lambda 0 = + 0,32500.10^{-1}$
$\lambda 1 = + 0,29684$
$\lambda 2 = - 0,99723$
$\lambda 3 = + 0,82973$
$\lambda 4 = + 0,40616$
$\lambda 5 = - 0,10053.10$
$\lambda 6 = + 0,44222$

16

EP 0 327 435 B1

— alors que les ordonnées réduites de la ligne d'intrados dudit profil sont données
• entre X/l = 0 et X/l = 0,26478, par la formule

$$Y/l = \mu1(X/l)^{\frac{1}{2}} + \mu2(X/l) + \mu3(X/l)^2 + \mu4(X/l)^3 + \mu5(X/l)^4 + \mu6(X/l)^5 + \mu7(X/l)^6 \quad (32)$$

avec
$\mu1 = -0{,}19314$
$\mu2 = -0{,}22031$
$\mu3 = +0{,}44399{.}10$
$\mu4 = -0{,}41389{.}10^2$
$\mu5 = +0{,}23230{.}10^3$
$\mu6 = -0{,}66179{.}10^3$
$\mu7 = +0{,}74216{.}10^3$
• entre X/l = 0,26478 et X/l = 1, par la formule

$$Y/l = \nu0 + \nu1(X/l) + \nu2(X/l)^2 + \nu3(X/l)^3 + \nu4(X/l)^4 + \nu5(X/l)^5 + \nu6(X/l)^6 \quad (33)$$

avec
$\nu0 = -0{,}42417{.}10^{-1}$
$\nu1 = -0{,}29161$
$\nu2 = +0{,}57883$
$\nu3 = +0{,}41309$
$\nu4 = -0{,}19045{.}10$
$\nu5 = +0{,}18776{.}10$
$\nu6 = -0{,}63583$

Notamment pour l'application particulière à un rotor de stabilisation transversale pour hélicoptère, il est avantageux que le profil selon l'invention soit utilisé pour des nombres de Mach d'adaptation Mad qui, en fonction de l'épaisseur maximale relative e/l dudit profil, varient selon la formule

$$Mad = \phi0 + \phi1(e/l) \quad (34)$$

avec
$\phi0 = -0{,}88636{.}10$
$\phi1 = +0{,}15320{.}10$

Les valeurs du nombre de Mach d'adaptation ainsi obtenues ne sont pas critiques, car les profils conformes à l'invention possèdent de très bonnes performances pour des plages de nombres de Mach autour du Mach d'adaptation d'environ 30%.

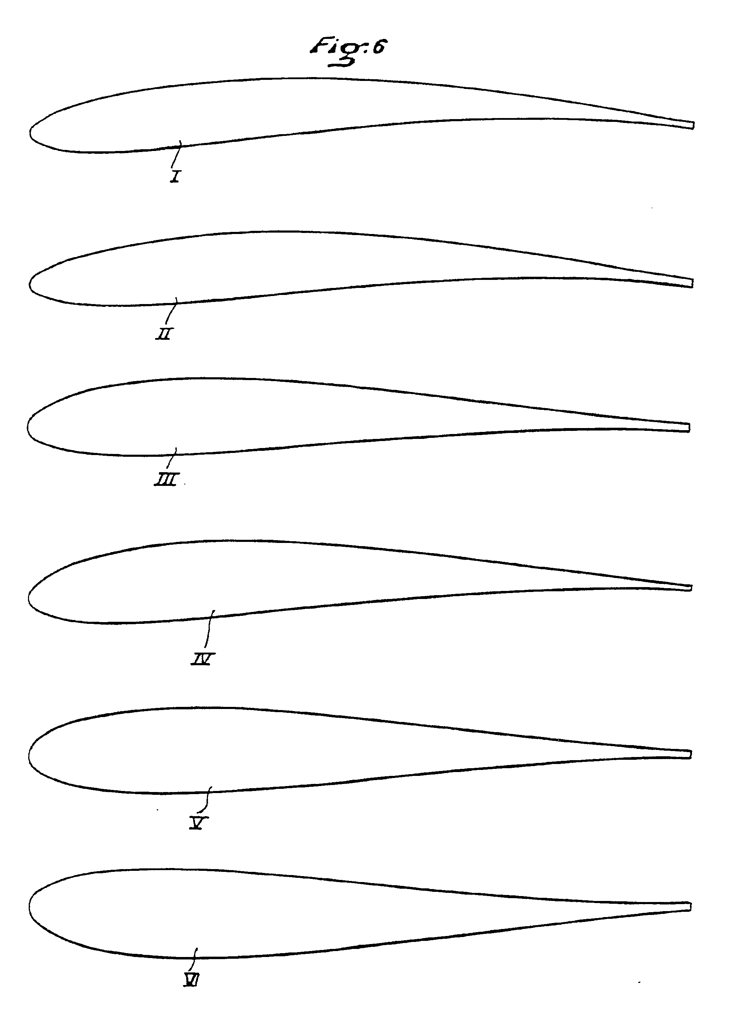

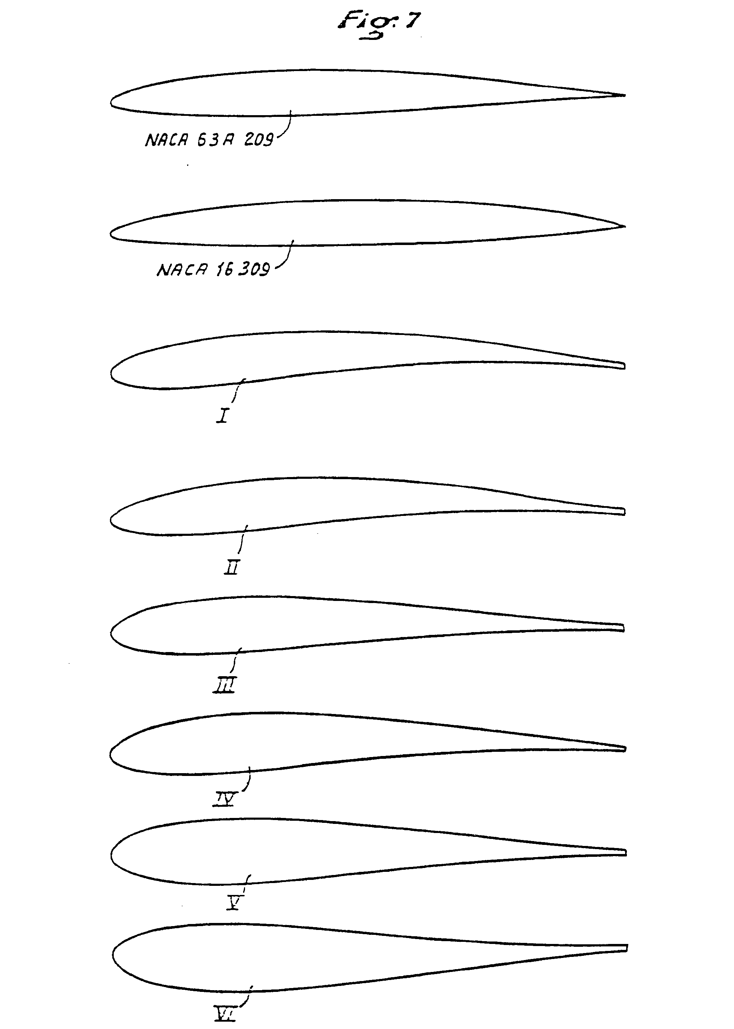

Sur la figure 6, on a représenté schématiquement chacun des profils I à VI particuliers conformes à la présente invention. De plus, sur la figure 7, on a tracé, à plus petite échelle, lesdits profils I à VI, ainsi que les profils connus NACA 63 A 209 et NACA 16309, généralement utilisés pour la réalisation d'hélices carénées. Cette figure 7 permet donc de comparer les profils I à VI de l'invention avec ces deux profils connus et elle montre que les profils de l'invention sont très différents de ces derniers.

Des essais comparatifs effectués dans les mêmes conditions sur les profils II et IV selon l'invention et les profils classiques NACA 16309 et NACA 63 A 209 ont confirmé les excellentes performances des profils selon l'invention.

L'évolution des courbures dans la région 2.1 de l'extrados des profils selon l'invention permet de réduire en valeur absolue le coefficient de pression minimal à l'extrados par rapport aux profils classiques NACA 63, comme le montrent les figures 8A et 8B, dans des conditions de nombre de Mach et de coefficient de portance représentatifs de ceux rencontrés sur une pale d'hélice carénée.

Pour des nombres de Mach et des coefficients de portance plus élevés, représentatifs des conditions rencontrées vers l'extrémité de la pale, les évolutions de courbure dans les régions 2.2 évitent toute formation d'onde de choc à l'extrados comme le montrent les figures 9A et 9B, contrairement aux profils classiques NACA. Les évolutions de courbure dans la région 2.3 assurent par ailleurs une recompression progressive de l'écoulement, diminuant d'intensité au voisinage du bord de fuite, recompression évitant un décollement prématuré de la couche limite, ce qui confère aux profils selon l'invention de faibles valeurs de coefficient de traînée pour des coefficients de portance élevés.

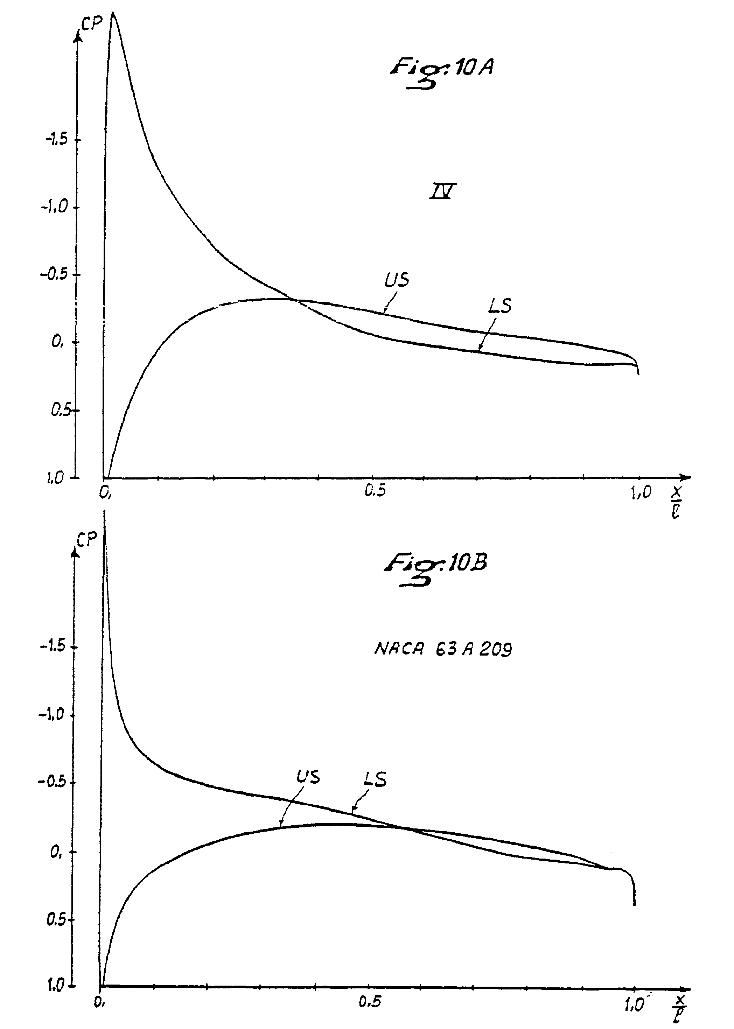

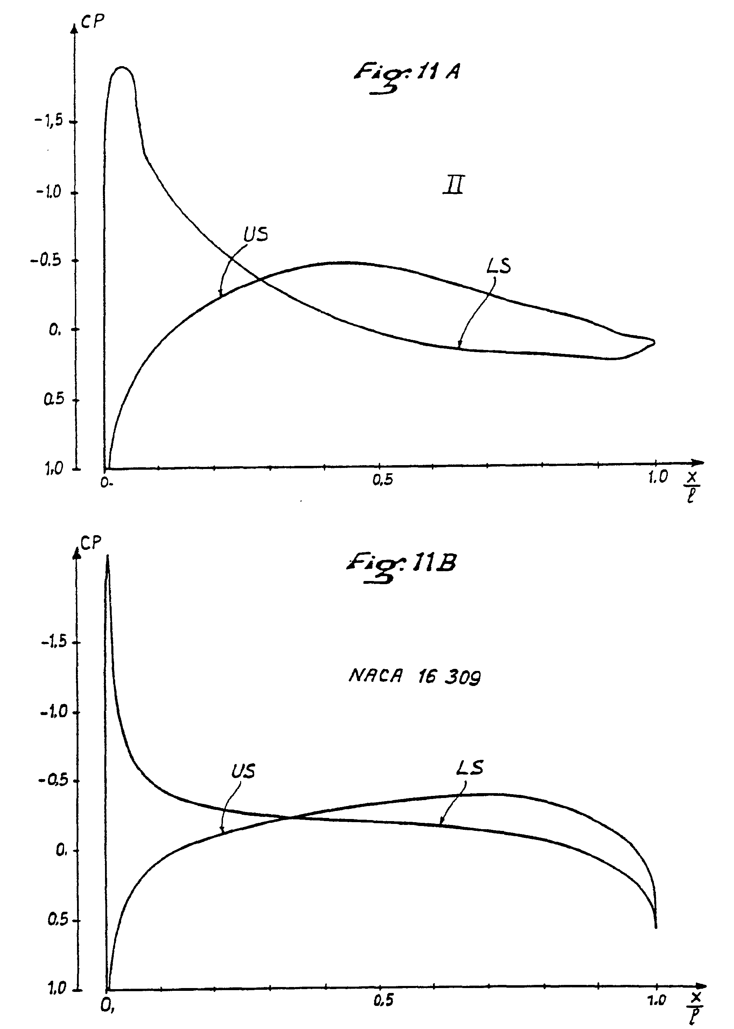

Les évolutions de la courbure dans les régions 3.1 et 3.2 de l'intrados permettent d'obtenir pour des valeurs du coefficient de portance inférieures à la portance d'adaptation des valeurs de survitesses à l'intrados moins

17

EP 0 327 435 B1

élevées et des recompressions plus progressives de l'écoulement que sur les profils classiques comme le montrent les figures 10A, 10B, 11A et 11B. L'épaississement de la couche limite est donc beaucoup moins fort, ce qui procure aux profils selon l'invention une plage de Cz d'utilisation pour des Cz inférieurs au Cz d'adaptation beaucoup plus étendue que sur les profils existants. Par ailleurs, les évolutions de courbure dans la région 3.3 assurent un niveau de vitesse presque constant et évitent une recompression brutale de l'écoulement au voisinage du bord de fuite. Il s'en suit évidemment de meilleures valeurs du coefficient de traînée.

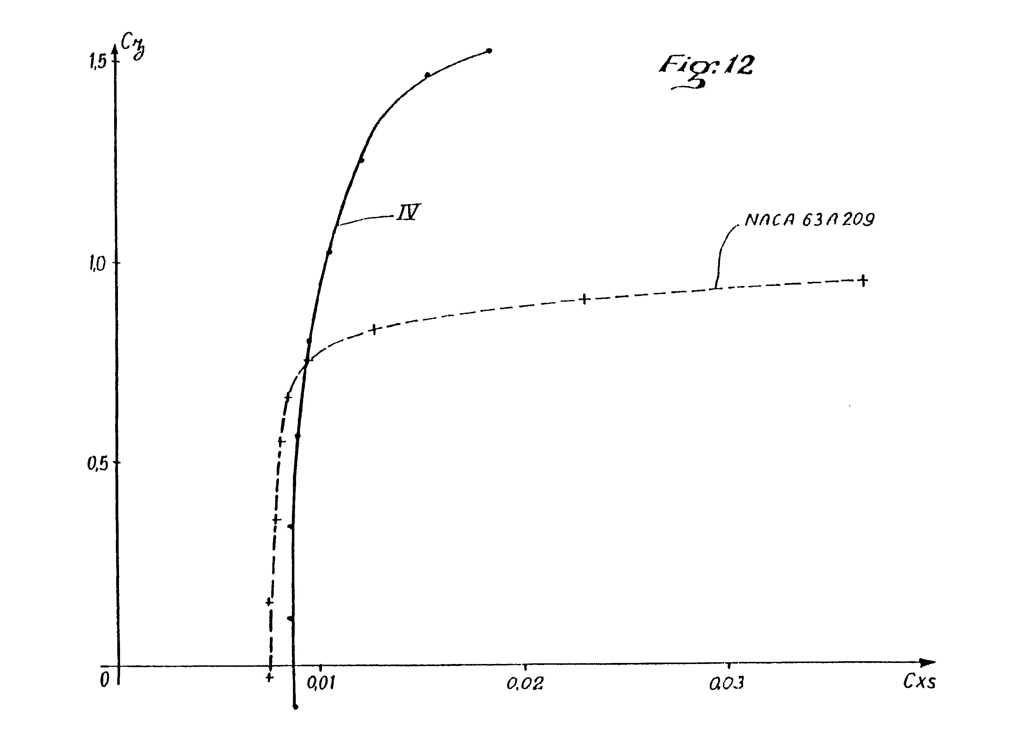

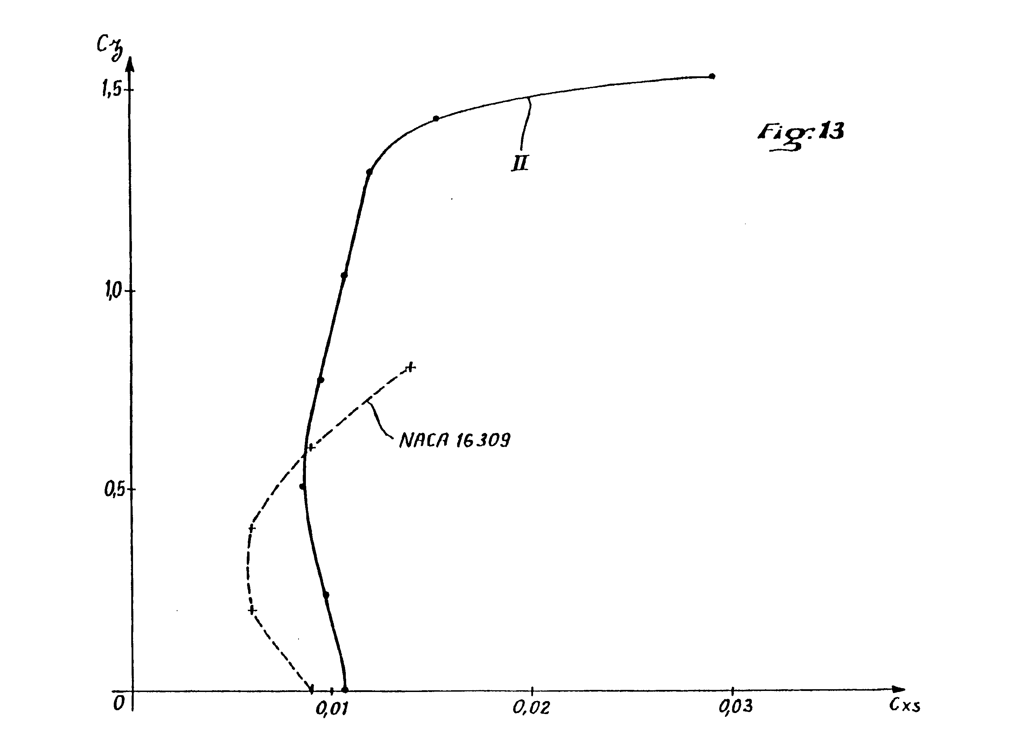

Les figures 12 et 13 démontrent l'accroissement important de la plage de bon fonctionnement en Cz positif obtenu avec le profil selon l'invention. Ces figures mettent également en évidence le gain obtenu sur la plage de fonctionnement des profils.

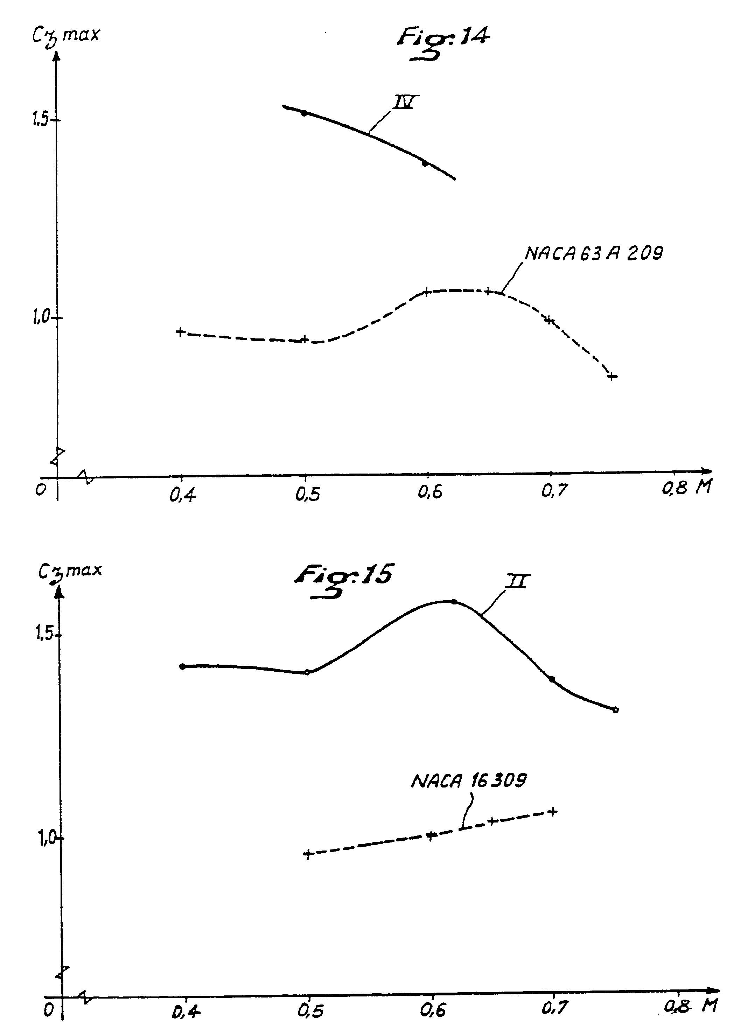

Les figures 14 et 15 démontrent que les gains en portance maximale obtenus avec les profils selon l'invention sont très importants et dépassent parfois 50%.

Pour toutes les conditions de fonctionnement des sections de pales d'hélices carénées, telles que celles utilisées sur les dispositifs de stabilisation transversale d'hélicoptères ou les hélices sustentatrices de véhicules à coussin d'air, les profils selon l'invention possèdent de meilleures performances que les profils classiques, c'est-à-dire des plages de portance étendues avec de faibles niveaux de traînée dans une large gamme de nombres de Mach et de fortes valeurs de portance maximale et minimale. Ces bonnes performances se conservent pour de faibles valeurs du nombre de Reynolds.

Les profils conformes à la présente invention permettent donc d'engendrer des pales d'hélices carénées permet tant d'obtenir des valeurs remarquables de la figure de mérite et de la traction, ainsi que des pales de ventilateurs carénés peu chargés à pas variable présentant de bonnes caractéristiques débit-pression.

## Revendications

1. Profil (1) pour pale d'hélice aérienne carénée, dont l'épaisseur relative est comprise entre 9% et 15%, caractérisé en ce que, la courbure dudit profil ayant une valeur maximale au bord d'attaque (A) de celui-ci comprise entre 47 et 98 en fonction de ladite épaisseur relative, la ligne d'extrados (2) dudit profil comporte, du bord d'attaque (A) au bord de fuite (C), trois portions successives (2.1, 2.2 et 2.3) telles que
— dans la première portion (2.1), la courbure décroît rapidement de ladite valeur maximale au bord d'attaque à une valeur voisine de 20 en un premier point (B) dont l'abscisse réduite le long de la corde du profil, comptée à partir du bord d'attaque, est voisine de 1% ;
— dans la deuxième portion (2.2), la courbure décroît plus lentement de ladite valeur voisine de 20 audit premier point (B) jusqu'à une valeur voisine de 1 en un deuxième point (D) dont l'abscisse réduite le long de ladite corde, comptée à partir du bord d'attaque, est voisine de 25%, et
— dans la troisième portion (2.3), la courbure est inférieure à 1 entre ledit deuxième point (D) et ledit bord de fuite (C),
tandis que la ligne d'intrados (3) dudit profil comporte, du bord d'attaque (A) au bord de fuite (F), trois portions successives (3.1, 3.2 et 3.3), telles que :
— dans la première portion (3.1), la courbure décroît de ladite valeur maximale au bord d'attaque à une valeur voisine de 11 en un troisième point (G) dont l'abscisse réduite le long de la corde du profil, comptée à partir dudit bord d'attaque, est voisine de 2% ;
— dans la deuxième portion (3.2), qui s'étend dudit troisième point (G) jusqu'à un quatrième point (H) dont l'abscisse réduite le long de la corde du profil comptée à partir dudit bord d'attaque est comprise entre 30% et 70%, la courbure continue de décroître de cette valeur voisine de 11 jusqu'à s'annuler ; et
— dans la troisième portion (3.3), la courbure est négative et inférieure à 1 en valeur absolue, jusqu'au bord de fuite (F).

2. Profil selon la revendication 1,
caractérisé en ce que la valeur COA de la courbure au bord d'attaque (A), rapportée à la longueur $l$ de la corde du profil, est donnée par l'expression

$$COA = a1(e/l) + a2(e/l)^2 + a3(e/l)^3 + a4(e/l)^4 + a5(e/l)^5 \quad (1)$$

dans laquelle
— e/l est l'épaisseur relative maximale du profil (1), et
— a1, a2, a3, a4 et a5 sont des coefficients constants.

3. Profil selon la revendication 2,
caractérisé en ce que lesdits coefficients constants ont les valeurs respectives suivantes :
a1 = – 0,2936.10⁶

$a2 = + 0,99839.10^7$

$a3 = - 0,12551.10^9$

$a4 = + 0,69412.10^9$

$a5 = - 0,14276.10^{10}$

4. Profil selon la revendication 1,

caractérisé en ce que, le long de ladite deuxième portion (2.2) d'extrados, la courbure (CO) est donnée par l'expression

$$CO^{\frac{1}{2}} = a6 + a7 \, (X/l)^{\frac{1}{2}} + a8 \, (X/l), \quad (2)$$

dans laquelle a6, a7 et a8 sont des coefficients constants, X/l étant l'abscisse réduite le long de la corde du profil, comptée à partir du bord d'attaque, d'un point quelconque de cette deuxième portion.

5. Profil selon la revendication 4,

caractérisé en ce que lesdits coefficients constants ont les valeurs respectives suivantes :

$a6 = + 0,72957.10$

$a7 = - 0,31509.10^2$

$a8 = + 0,37217.10^2$

6. Profil selon la revendication 1 et dont le coefficient de portance d'adaptation est inférieur à 0,3, caractérisé en ce que ladite troisième portion (2.3) d'extrados comporte un point (E) d'inversion de courbure dont l'abscisse réduite le long de la corde du profil, comptée à partir du bord d'attaque, est comprise entre 45% et 85%.

7. Profil selon la revendication 6,

caractérisé en ce que l'abscisse réduite (XE/l) dudit point E d'inversion de courbure, le long de la corde dudit profil et comptée à partir du bord d'attaque, est donnée par l'expression

$$XE/l = 0,58333 + 0,91667 \, Cza - 1,1667(Cza)^2, \quad (3)$$

dans laquelle Cza est la valeur du coefficient de portance d'adaptation.

8. Profil selon la revendication 1,

caractérisé en ce que l'abscisse réduite du point de courbure nulle de ladite deuxième portion (3.2) d'intrados est donnée par la formule

$$X/l = a9(e/l) + a10(e/l)^2 + a11(e/1)^3 + a12(e/l)^4 + a13(e/l)^5 \quad (4)$$

dans laquelle

— e/l est l'épaisseur relative maximale du profil (1) et

— a9, a10, a11, a12 et a13 sont des coefficients constants.

9. Profil selon la revendication 8,

caractérisé en ce que lesdits coefficients constants ont les valeurs respectives suivantes :

$a9 = - 0,39176.10^3$

$a10 = + 0,13407.10^5$

$a11 = - 0,16845.10^6$

$a12 = + 0,92807.10^6$

$a13 = - 0,18878.10^7$

10. Profil selon la revendication 1, défini de façon connue à partir d'une loi de variation d'épaisseur et d'une ligne moyenne ou squelette,

caractérisé en ce que, en fonction de l'abscisse réduite X/l le long de la corde comptée à partir du bord d'attaque (A), les ordonnées réduites Y/l et Ye/l dudit squelette et de ladite épaisseur sont respectivement données par les formules suivantes :

$$Y/l = c1(X/l) + c2(X/l)^2 + c3(X/l)^3 + c4(X/l)^4 + c5(X/l)^5 + c6(X/l)^6 + c7(X/l)^7 \quad (5)$$

$$(6) \quad Ye/l = b1(X/l) + b2(X/l)^2 + b3(X/l)^3 + b4(X/l)^4 + b5(X/l)^5$$

$$+ b6(X/l)^6 + b7(X/l)^7 + b8(X/l)^8 + b9(X/l)^9 + b10(X/l)^{10}$$

dans lesquelles les différents coefficients b1 à b10 et c1 à c7 sont constants.

11. Profil selon la revendication 10,
caractérisé en ce que les différents coefficients constants b1 à b10 sont donnés par les formules ci-après :

$$b1 = b11(e/l) + b12(e/l)^2 + b13(e/l)^3 + b14(e/l)^4 + b15(e/l)^5 + b16(e/l)^6 \quad (7.1)$$
$$b2 = b21(e/l) + b22(e/l)^2 + b23(e/l)^3 + b24(e/l)^4 + b25(e/1)^5 + b26(e/1)^5 \quad (7.2)$$
$$b10 = b101(e/l) + b102(e/l)^2 + b103(e/l)^3 + b104(e/l)^4 + b105(e/l)^5 + b106(e/l)^6 \quad (7.10)$$

dans lesquelles e/l est l'épaisseur maximale réduite dudit profil, et b11 à b106 sont des coefficients constants.

12. Profil selon la revendication 11,
caractérisé en ce que les coefficients constants b11 à b106 ont les valeurs respectives suivantes :

$$b11 = +0,98542.10^{5}$$
$$b12 = -0,43028.10^{7}$$
$$b13 = +0,74825.10^{8}$$

$$b14 = -0,64769.10^{9}$$
$$b15 = +0,27908.10^{10}$$
$$b16 = -0,47889.10^{10}$$

$$b21 = -0,33352.10^{7}$$
$$b22 = +0,14610.10^{9}$$
$$b23 = -0,25480.10^{10}$$
$$b24 = +0,22115.10^{11}$$
$$b25 = -0,95525.10^{11}$$
$$b26 = +0,16428.10^{12}$$

$$b31 = +0,39832.10^{8}$$
$$b32 = -0,17465.10^{10}$$
$$b33 = +0,30488.10^{11}$$
$$b34 = -0,26484.10^{12}$$
$$b35 = +0,11449.10^{13}$$
$$b36 = -0,19704.10^{13}$$

$$b61 = -0,18709.10^{10}$$
$$b62 = +0,82093.10^{11}$$
$$b63 = -0,14340.10^{13}$$

$$b64 = +0,12464.10^{14}$$
$$b65 = -0,53912.10^{14}$$
$$b66 = +0,92831.10^{14}$$

$$b71 = +0,25348.10^{10}$$
$$b72 = -0,11123.10^{12}$$
$$b73 = +0,19432.10^{13}$$
$$b74 = -0,16892.10^{14}$$
$$b75 = +0,73066.10^{14}$$
$$b76 = -0,12582.10^{15}$$

$$b81 = -0,20869.10^{10}$$
$$b82 = +0,91583.10^{11}$$
$$b83 = -0,16000.10^{13}$$
$$b84 = +0,13909.10^{14}$$
$$b85 = -0,60166.10^{14}$$
$$b86 = +0,10361.10^{15}$$

20

$$b41 = -0,24305.10^9 \qquad b91 = +0,95554.10^9$$

$$b42 = +0,10661.10^{11} \qquad b92 = -0,41936.10^{11}$$

$$b43 = -0,18618.10^{12} \qquad b93 = +0,73266.10^{12}$$

$$b44 = +0,16178.10^{13} \qquad b94 = -0,63693.10^{13}$$

$$b45 = -0,69957.10^{13} \qquad b95 = +0,27553.10^{14}$$

$$b46 = +0,12043.10^{14} \qquad b96 = -0,47450.10^{14}$$

$$b51 = +0,86049.10^9 \qquad b101 = -0,18663.10^9$$

$$b52 = -0,37753.10^{11} \qquad b102 = +0,81909.10^{10}$$

$$b53 = +0,65939.10^{12} \qquad b103 = -0,14311.10^{12}$$

$$b54 = -0,57309.10^{13} \qquad b104 = +0,12441.10^{13}$$

$$b55 = +0,24785.10^{14} \qquad b105 = -0,58321.10^{13}$$

$$b56 = -0,42674.10^{14} \qquad b106 = +0,92688.10^{13}$$

13. Profil selon la revendication 10, dont le squelette présente une courbure maximale relative comprise entre −2% et +5%,
caractérisé en ce que les différents coefficients constants c1 à c7 sont donnés par les formules ci-après :

$$c1 = c11(e/l) + c12(e/l)^2 + c13(e/l)^3 + c14(e/l)^4 + c15(e/l)^5 + c16(e/l)^6 \qquad (8.1)$$
$$c2 = c21(e/l) + c22(e/l)^2 + c23(e/l)^3 + c24(e/l)^4 + c25(e/l)^5 + c26(e/l)^6 \qquad (8.2)$$
$$c7 = c71(e/l) + c72(e/l)^2 + c73(e/l)^3 + c74(e/l)^4 + c75(e/l)^5 + c76(e/l)^6 \qquad (8.7)$$

dans lesquelles e/l est l'épaisseur maximale réduite dudit profil et c11 à c76 sont des coefficients constants.

14. Profil selon la revendication 13,
caractérisé en ce que les coefficients constants c11 à c76 ont les valeurs respectives suivantes :

$$c11 = -0,29874.10^1 \qquad c51 = -0,18750.10^4$$

$$c12 = -0,61332.10^2 \qquad c52 = +0,72410.10^5$$

$$c13 = +0,60890.10^5 \qquad c53 = +0,90745.10^7$$

$$c14 = -0,43208.10^6 \qquad c54 = -0,54687.10^9$$

$$c15 = -0,12037.10^9 \qquad c55 = +0,58423.10^{10}$$

$$c16 = +0,24680.10^{10} \qquad c56 = +0,50242.10^{11}$$

$$c_{21} = +0,17666.10^2 \qquad c_{61} = +0,12366.10^4$$

$$c_{22} = +0,70530.10^4 \qquad c_{62} = -0,43178.10^5$$

$$c_{23} = -0,40637.10^6 \qquad c_{63} = -0,61307.10^7$$

$$c_{24} = -0,28310.10^8 \qquad c_{64} = +0,33946.10^9$$

$$c_{25} = +0,20813.10^{10} \qquad c_{65} = -0,26651.10^{10}$$

$$c_{26} = -0,31463.10^{11} \qquad c_{66} = -0,49209.10^{11}$$

$$c_{31} = -0,38189.10^3 \qquad c_{71} = -0,31247.10^3$$

$$c_{32} = +0,31787.10^2 \qquad c_{72} = +0,83939.10^4$$

$$c_{33} = +0,23684.10^7 \qquad c_{73} = +0,16280.10^7$$

$$c_{34} = -0,47636.10^8 \qquad c_{74} = -0,74431.10^6$$

$$c_{35} = -0,26705.10^{10} \qquad c_{75} = -0,30520.10^8$$

$$c_{36} = +0,65378.10^{11} \qquad c_{76} = +0,21265.10^{11}$$

$$c_{41} = +0,13180.10^4$$

$$c_{42} = -0,44650.10^5$$

$$c_{43} = -0,65945.10^7$$

$$c_{44} = +0,35822.10^9$$

$$c_{45} = -0,24986.10^{10}$$

$$c_{46} = -0,58675.10^{11}$$

15. Profil selon la revendication 10,
caractérisé en ce que la cambrure maximale Kmax du squelette d'un profil est déterminée, en fonction de la valeur du coefficient de portance d'adaptation Cza, par la formule

$$Kmax = d_1(Cza) + d_2(Cza)^2 + d_3(Cza)^3 + d_4(Cza)^4 + d_5(Cza)^5 + d_6(Cza)^6 \qquad (9)$$

dans laquelle d1 à d6 sont des coefficients constants.

16. Profil selon la revendication 15,
caractérisé en ce que les coefficients constants d1 à d6 ont les valeurs suivantes :

d1 = + 0,11017
d2 = − 0,30167
d3 = − 0,58541
d4 = + 0,39240.10

d5 = − 0,53223.10
d6 = + 0,22132.10

17. Profil selon la revendication 1, ayant une épaisseur maximale relative égale à 9,5% et pour un coefficient de portance d'adaptation égal à 1,
caractérisé en ce que, en fonction de l'abscisse réduite X/l le long de la corde, comptée à partir du bord d'attaque (A),
— les ordonnées réduites de sa ligne d'extrados sont données
● entre X/l = 0 et X/l = 0,39433, par la formule

$$Y/l = f1(X/l)^{\frac{1}{2}} + f2(X/l) + f3(X/l)^2 + f4(X/l)^3 + f5(X/l)^4 + f6(X/l)^5 + f7(X/l)^6 \quad (10)$$

avec
f1 = + 0,16227
f2 = − 0,11704.10$^{-1}$
f3 = + 0,13247
f4 = − 0,25016.10
f5 = + 0,10682.10$^2$
f6 = − 0,22210.10$^2$
f7 = + 0,17726.10$^2$
● entre X/l = 0,39433 et X/l = 1, par la formule

$$Y/l = g0 + g1(X/l) + g2(X/l)^2 + g3(X/l)^3 + g4(X/l)^4 + g5(X/l)^5 + g6(X/l)^6 \quad (11)$$

avec
g0 = + 0,22968
g1 = − 0,17403.10
g2 = + 0,77952.10
g3 = − 0,17457.10$^2$
g4 = + 0,20845.10$^2$
g5 = − 0,13004.10$^2$
g6 = + 0,33371.10
— alors que les ordonnées réduites de la ligne d'intrados dudit profil sont données
● entre X/l = 0 et X/l = 0,11862, par la formule

$$Y/l = h1(X/1)^{\frac{1}{2}} + h2(X/l) + h3(X/l)^2 + h4(X/l)^3 + h5(X/l)^4 + h6(X/l)^5 + h7(X/l)^6 \quad (12)$$

avec
h1 = − 0,13971
h2 = + 0,10480.10$^{-3}$
h3 = + 0,51698.10
h4 = − 0,11297.10$^3$
h5 = + 0,14695.10$^4$
h6 = − 0,96403.10$^4$
h7 = + 0,24769.10$^5$
● entre X/l = 0,11862 et X/l = 1, par la formule

$$Y/l = i0 + i1(X/l) + i2(X/l)^2 + i3(X/l)^3 + i4(X/l)^4 + i5(X/l)^5 + i6(X/l)^6 \quad (13)$$

avec
i0 = − 0,25915.10$^{-1}$
i1 = − 0,96597.10$^{-1}$
i2 = + 0,49503
i3 = + 0,60418.10$^{-1}$
i4 = − 0,17206.10
i5 = + 0,20619.10
i6 = − 0,77922

18. Profil selon la revendication 1, ayant une épaisseur maximale relative égale à 10,2% et pour un coefficient de portance d'adaptation égal à 0,9,

caractérisé en ce que, en fonction de l'abscisse réduite $X/l$ le long de la corde, comptée à partir du bord d'attaque (A),

— les ordonnées réduites de la ligne d'extrados sont données

• entre $X/l = 0$ et $X/l = 0{,}39503$, par la formule

$$Y/l = j1(X/l)^{\frac{1}{2}} + j2(X/l) + j3(X/l)^2 + j4(X/l)^3 + j5(X/l)^4 + j6(X/l)^5 + j7(X/l)^6 \quad (14)$$

avec

$j1 = + 0{,}14683$
$j2 = - 0{,}67115.10^{-2}$
$j3 = + 0{,}44720$
$j4 = - 0{,}36828.10$
$j5 = + 0{,}12651.10^2$
$j6 = - 0{,}23835.10^2$
$j7 = + 0{,}18155.10^2$

• entre $X/l = 0{,}39503$ et $X/l = 1$, par la formule

$$Y/l = k0 + k1(X/l) + k2(X/l)^2 + k3(X/l)^3 + k4(X/l)^4 + k5(X/l)^5 + k6(X/l)^6 \quad (15)$$

avec

$k0 = + 0{,}45955$
$k1 = - 0{,}39834.10$
$k2 = + 0{,}16726.10^2$
$k3 = - 0{,}35737.10^2$
$k4 = + 0{,}41088.10^2$
$k5 = - 0{,}24557.10^2$
$k6 = + 0{,}60088.10$

— alors que les ordonnées réduites de la ligne d'intrados dudit profil sont données

• entre $X/l = 0$ et $X/l = 0{,}14473$, par la formule

$$Y/l = m1(X/l)^{\frac{1}{2}} + m2(X/l) + m3(X/l)^2 + m4(X/l)^3 + m5(X/l)^4 + m6(X/l)^5 + m7(X/l)^6 \quad (16)$$

avec

$m1 = - 0{,}13297$
$m2 = + 0{,}36163.10^{-1}$
$m3 = + 0{,}17284.10$
$m4 = - 0{,}27664.10^2$
$m5 = + 0{,}30633.10^3$
$m6 = - 0{,}16978.10^4$
$m7 = + 0{,}36477.10^4$

• entre $X/l = 0{,}14473$ et $X/l = 1$, par la formule

$$Y/l = n0 + n1(X/l) + n2(X/l)^2 + n3(X/l)^3 + n4(X/l)^4 + n5(X/l)^5 + n6(X/l)^6 \quad (17)$$

avec

$n0 = - 0{,}30824.10^{-1}$
$n1 = - 0{,}20564.10^{-1}$
$n2 = - 0{,}21738$
$n3 = + 0{,}24105.10$
$n4 = - 0{,}53752.10$
$n5 = + 0{,}48110.10$
$n6 = - 0{,}15826.10$

19. Profil selon la revendication 1, ayant une épaisseur maximale relative égale à 11,7% et pour un coefficient de portance d'adaptation égal à 0,5,

caractérisé en ce que, en fonction de l'abscisse réduite $X/l$ le long de la corde, comptée à partir du bord d'attaque (A),

— les ordonnées réduites de la ligne d'extrados sont données

● entre X/l = 0 et X/l = 0,28515, par la formule

$$Y/l = t1(X/l)^{\frac{1}{2}} + t2(X/l) + t3(X/l)^2 + t4(X/l)^3 + t5(X/l)^4 + t6(X/l)^5 + t7(X/l)^6 \quad (18)$$

avec
$t1 = + 0{,}21599$
$t2 = - 0{,}17294$
$t3 = + 0{,}22044.10$
$t4 = - 0{,}26595.10^2$
$t5 = + 0{,}14642.10^3$
$t6 = - 0{,}39764.10^3$
$t7 = + 0{,}42259.10^3$
● entre X/l = 0,28515 et X/l = 1, par la formule

$$Y/l = u0 + 1(X/1) + u2(X/l)^2 + u3(X/l)^3 + u4(X/l)^4 + u5(X/l)^5 + u6(X/l)^6 \quad (19)$$

avec
$u0 = + 0{,}39521.10^{-1}$
$u1 = + 0{,}26170$
$u2 = - 0{,}47274$
$u3 = - 0{,}40872$
$u4 = + 0{,}15968.10$
$u5 = - 0{,}15222.10$
$u6 = + 0{,}51057$
— alors que les ordonnées réduites de la ligne d'intrados dudit profil sont données
● entre X/l = 0 et X/l = 0,17428, par la formule

$$Y/l = v1(X/l)^{\frac{1}{2}} + v2(X/l) + v3(X/l)^2 + v4(X/l)^3 \; v5(X/l)^4 + v6(X/l)^5 + v7(X/l)^6 \quad (20)$$

avec
$v1 = - 0{,}16526$
$v2 = - 0{,}31162.10^{-1}$
$v3 = + 0{,}57567.10$
$v4 = - 0{,}10148.10^3$
$v5 = + 0{,}95843.10^3$
$v6 = - 0{,}44161.10^4$
$v7 = + 0{,}78519.10^4$
● entre X/l = 0,17428 et X/l = 1, par la formule

$$Y/l = w0 + w1(X/l) + w2(X/l)^2 + w3(X/l)^3 + w4(X/l)^4 + w5(X/l)^5 + w6(X/l)^6 \quad (21)$$

avec
$w0 = - 0{,}25152.10^{-1}$
$w1 = - 0{,}22525$
$w2 = + 0{,}89038$
$w3 = - 0{,}10131.10$
$w4 = + 0{,}16240$
$w5 = + 0{,}46968$
$w6 = - 0{,}26400$

20. Profil selon la revendication 1, ayant une épaisseur maximale relative égale à 12% et pour un coefficient de portance d'adaptation égal à 0,6,
caractérisé en ce que, en fonction de l'abscisse réduite X/l le long de la corde, comptée à partir du bord d'attaque (A),
— les ordonnées réduites de la ligne d'extrados sont données
● entre X/l = 0 et X/l = 0,29461, par la formule

$$Y/l = p1(X/l)^{\frac{1}{2}} + p2(X/l) + p3(X/l)^2 + p4(X/l)^3 + p5(X/l)^4 + p6(X/l)^5 + p7(X/l)^6 \quad (22)$$

EP 0 327 435 B1

avec
p1 = + 0,16347
p2 = + 0,20845
p3 = − 0,20506.10
p4 = + 0,13223.$10^2$
p5 = − 0,63791.$10^2$
p6 = + 0,16200.$10^3$
p7 = − 0,16302.$10^3$
• entre X/l = 0,29461 et X/l = 1, par la formule

$$Y/l = q0 + 1(X/l) + q2(X/l)^2 + q3(X/l)^3 + q4(X/l)^4 + q5(X/l)^5 + q6(X/l)^6 \quad (23)$$

avec
q0 = + 0,54860.$10^{-1}$
q1 = + 0,13872
q2 = + 0,16460
q3 = − 0,17424.10
q4 = + 0,28085.10
q5 = − 0,19062.10
q6 = + 0,48442
alors que les ordonnées réduites de la ligne d'intrados dudit profil sont données
• entre X/l = 0 et X/l = 0,14931, par la formule

$$Y/l = r1(X/l)^{\frac{1}{2}} + r2(X/l) + r3(X/l)^2 + r4(X/l)^3 + r5(X/l)^4 + r6(X/l)^5 + r7(X/l)^6 \quad (24)$$

avec
r1 = − 0,19086
r2 = + 0,29842
r3 = − 0,51359.10
r4 = + 0,11144.$10^3$
r5 = − 0,11384.$10^4$
r6 = + 0,56797.$10^4$
r7 = − 0,11091.$10^5$
• entre X/l = 0,14931 et X/l = 1, par la formule

$$Y/l = s0 + s1(X/l) + S2(X/l)^2 + s3(X/l)^3 + s4(X/l)^4 + s5(X/l)^5 + s6(X/l)^6 \quad (25)$$

avec
s0 = − 0,31248.$10^{-1}$
s1 = − 0,12350
s2 = + 0,42720
s3 = + 0,32923
s4 = − 0,19650.10
s5 = + 0,21099.10
s6 = − 0,74935

21. Profil selon la revendication 1, ayant une épaisseur maximale relative égale à 12,8% et pour un coefficient de portance d'adaptation égal à 0,2,
caractérisé en ce que, en fonction de l'abscisse réduite X/l le long de la corde, comptée à partir du bord d'attaque (A),
— les ordonnées réduites de la ligne d'extrados sont données
• entre X/l = 0 et X/l = 0,26861, par la formule

$$Y/l = \alpha1(X/l)^{\frac{1}{2}} + \alpha2(X/l) + \alpha3(X/l)^2 + \alpha4(X/l)^3 + \alpha5(X/l)^4 + \alpha6(X/l)^5 + \alpha7(X/l)^6 \quad (26)$$

avec
$\alpha$1 = + 0,19762
$\alpha$2 = + 0,17213
$\alpha$3 = − 0,53137.10

26

$\alpha4 = + 0,56025.10^2$

$\alpha5 = - 0,32319.10^3$

$\alpha6 = + 0,92088.10^3$

$\alpha7 = - 0,10229.10^4$

• entre $X/l = 0,26861$ et $X/l = 1$, par la formule

$$Y/l = \beta0 + \beta1(X/l) + \beta2(X/l)^2 + \beta3(X/l)^3 + \beta4(X/l)^4 + \beta5(X/l)^5 + \beta6(X/l)^6 \quad (27)$$

avec

$\beta0 = + 0,28900.10^{-1}$

$\beta1 = + 0,38869$

$\beta2 = - 0,10796.10$

$\beta3 = + 0,80848$

$\beta4 = + 0,45025$

$\beta5 = - 0,10636.10$

$\beta6 = + 0,47182$

— alors que les ordonnées réduites de la ligne d'intrados dudit profil sont données

• entre $X/l = 0$ et $X/l = 0,20934$, par la formule

$$Y/l = \gamma1(X/l)^{\frac{1}{2}} + \gamma2(X/l) + \gamma3(X/l)^2 + \gamma4(X/l)^3 + \gamma5(X/l)^4 + \gamma6(X/l)^5 + \gamma7(X/l)^6 \quad (28)$$

avec

$\gamma1 = - 0,25376$

$\gamma2 = + 0,61860$

$\gamma3 = - 0,96212.10$

$\gamma4 = + 0,12843.10^3$

$\gamma5 = - 0,90701.10^3$

$\gamma6 = + 0,32291.10^4$

$\gamma7 = - 0,45418.10^4$

• entre $X/l = 0,20934$ et $X/l = 1$, par la formule

$$Y/l = \delta0 + \delta1(X/l) + \delta2(X/l)^2 + \delta3(X/l)^3 + \delta4(X/l)^4 + \delta5(X/l)^5 + \delta6(X/l)^6 \quad (29)$$

avec

$\delta0 = - 0,25234.10^{-1}$

$\delta1 = - 0,32905$

$\delta2 = + 0,10890.10$

$\delta3 = - 0,10066.10$

$\delta4 = - 0,32520$

$\delta5 = + 0,11325.10$

$\delta6 = - 0,54043$

22. Profil selon la revendication 1, ayant une épaisseur maximale relative égale à 13,9% et pour un coefficient de portance d'adaptation égal à – 0,1,

caractérisé en ce que, en fonction de l'abscisse réduite $X/l$ le long de la corde, comptée à partir du bord d'attaque (A),

— les ordonnées réduites de la ligne d'extrados sont données

• entre $X/l = 0$ et $X/l = 0,19606$, par la formule

$$Y/l = \varepsilon1(X/l)^{\frac{1}{2}} + \varepsilon2(X/l) + \varepsilon3(X/l)^2 + \varepsilon4(X/l)^3 + \varepsilon5(X/l)^4 + \varepsilon6(X/l)^5 + \varepsilon7(X/l)^6 \quad (30)$$

avec

$\varepsilon1 = + 0,22917$

$\varepsilon2 = - 0,22972$

$\varepsilon3 = + 0,21262.10$

$\varepsilon4 = - 0,39557.10^2$

$\varepsilon5 = + 0,32628.10^3$

$\varepsilon6 = - 0,13077.10^4$

$\varepsilon7 = + 0,20370.10^4$

• entre X/l = 0,19606 et X/l = 1, par la formule

$$Y/l = \lambda 0 + 1(X/l) + \lambda 2(X/l)^2 + \lambda 3(X/l)^3 + \lambda 4(X/l)^4 + \lambda 5(X/l)^5 + \lambda 6(X/l)^6 \quad (31)$$

avec
$\lambda 0 = + 0,32500.10^{-1}$
$\lambda 1 = + 0,29684$
$\lambda 2 = - 0,99723$
$\lambda 3 = + 0,82973$
$\lambda 4 = + 0,40616$
$\lambda 5 = - 0,10053.10$
$\lambda 6 = + 0,44222$
— alors que les ordonnées réduites de la ligne d'intrados dudit profil sont données
• entre X/l = 0 et X/l = 0,26478, par la formule

$$Y/l = \mu 1(X/l)^{\frac{1}{2}} + \mu 2(X/l) + \mu 3(X/l)^2 + \mu 4(X/l)^3 + \mu 5(X/l)^4 + \mu 6(X/l)^5 + \mu 7(X/l)^6 \quad (32)$$

avec
$\mu 1 = - 0,19314$
$\mu 2 = - 0,22031$
$\mu 3 = + 0,44399.10$
$\mu 4 = - 0,41389.10^2$
$\mu 5 = + 0,13230.10^3$
$\mu 6 = - 0,66179.10^3$
$\mu 7 = + 0,74216.10^3$
• entre X/l = 0,26478 et X/l = 1, par la formule

$$Y/l = \nu 0 + \nu 1(X/l) + \nu 2(X/l)^2 + \nu 3(X/l)^3 + \nu 4(X/l)^4 + \nu 5(X/l)^5 + \nu 6(X/l)^6 \quad (33)$$

avec
$\nu 0 = - 0,42417.10^{-1}$
$\nu 1 = - 0,29161$
$\nu 2 = + 0,57883$
$\nu 3 = + 0,41309$
$\nu 4 = - 0,19045.10$
$\nu 5 = + 0,18776.10$
$\nu 6 = - 0,63583$

23. Profil selon la revendication 1,
caractérisé en ce qu'il est utilisé pour des nombres de Mach d'adaptation Mad qui, en fonction de l'épaisseur maximale relative e/l dudit profil, varient selon la formule

$$Mad = \phi 0 + \phi 1(e/l) \quad (34)$$

avec
$\phi 0 = - 0,88636.10$
$\phi 1 = + 0,15320.10$

## Patentansprüche

1. Profil (1) für ein stromlinienförmiges Blatt einer Luftschraube, dessen relative Dicke 9% bis 15% beträgt, dadurch gekennzeichnet, daß die Krümmung des Profils an dessen Vorderkante (A) abhängig von der relativen Dicke einen Maximalwert von 47 bis 98 hat und daß die obere Profillinie (2) von der Vorderkante (A) zur Hinterkante (C) drei aufeinanderfolgende Abschnitte (2.1, 2.2 und 2.3) aufweist, nämlich :
— im ersten Abschnitt (2.1) nimmt die Krümmung schnell ab von dem Maximalwert an der Vorderkante auf einen Wert bei etwa 20 an einem ersten Punkt (B), dessen reduzierte Abszisse entlang der Profilsehne und von der Vorderkante aus gerechnet bei etwa 1% liegt ;
— im zweiten Abschnitt (2.2) nimmt die Krümmung langsamer ab von dem Wert bei etwa 20 am ersten

Punkt (B) auf einen Wert bei etwa 1 an einem zweiten Punkt (D), dessen reduzierte Abszisse entlang der Sehne von der Vorderkante aus gerechnet bei etwa 25% liegt ; und

— im dritten Abschnitt (2.3) ist die Krümmung geringer als 1 vom zweiten Punkt (D) bis zur Hinterkante (C), während die untere Profillinie (3) von der Vorderkante (A) zur Hinterkante (F) drei aufeinanderfolgende Abschnitte (3.1, 3.2 und 3.3) aufweist, nämlich :

— im ersten Abschnitt (3.1) nimmt die Krümmung ab von dem Maximalwert an der Vorderkante auf einen Wert bei etwa 11 an einem dritten Punkt (G), dessen reduzierte Abszisse entlang der Profilsehne von der Vorderkante aus gerechnet bei etwa 2% liegt ;

— im zweiten Abschnitt (3.2), der sich von dem dritten Punkt (G) bis zu einem vierten Punkt (H) erstreckt, dessen reduzierte Abszisse entlang der Profilsehne von der Vorderkante aus gerechnet 30% bis 70% beträgt, nimmt die Krümmung weiter ab von dem Wert bei etwa 11 bis auf Null ; und

— im dritten Abschnitt (3.3) ist die Krümmung negativ und als Absolutwert kleiner als 1 bis zur Hinterkante (F).

2. Profil nach Anspruch 1, dadurch gekennzeichnet, daß der Wert COA der Krümmung an der Vorderkante (A) bezogen auf die Länge 1 der Profilsehne gegeben ist durch den folgenden Ausdruck

$$COA = a1(e/l) + a2(e/l)^2 + a3(e/1)^3 + a4(e/l)^4 + a5(e/l)^5, \quad (1)$$

in welchem bedeuten

— e/l die maximale relative Dicke des Profils (1) und

— a1, a2, a3, a4 und a5 konstante Koeffizienten.

3. Profil nach Anspruch 2, dadurch gekennzeichnet, daß die konstanten Koeffizienten jeweils die folgenden Werte haben :

$a1 = - 0,2936.10^6$

$a2 = + 0,99839.10^7$

$a3 = - 0,12551.10^9$

$a4 = + 0,69412.10^9$

$a5 = - 0,14276.10^{10}$

4. Profil nach Anspruch 1 dadurch gekennzeichnet, daß entlang des zweiten Abschnitts (2.2) der Profiloberseite die Krümmung (CO) durch den folgenden Ausdruck gegeben ist

$$CO^{\frac{1}{2}} = a6 + a7(X/l)^{\frac{1}{2}} + a8(X/l), \quad (2)$$

in welchem a6, a7 und a8 konstante Koeffizienten sind und X/l die reduzierte Abszisse entlang der Profilsehne und von der Vorderkante aus gerechnet eines beliebigen Punktes dieses zweiten Abschnitts ist.

5. Profil nach Anspruch 4, dadurch gekennzeichnet, daß die konstanten Koeffizienten die folgenden Werte haben :

$a6 = + 0,72957.10$

$a7 = - 0,31509.10^2$

$a8 = + 0,37217.10^2$

6. Profil nach Anspruch 1, dessen Adaptationsauftriebskoeffizient kleiner als 0,3 ist, dadurch gekennzeichnet, daß der dritte Abschnitt (2.3) der Profiloberseite einen Krümmungswendepunkt (E) aufweist, dessen reduzierte Abszisse entlang der Profilsehne und von der Vorderkante aus gerechnet 45% bis 85% beträgt.

7. Profil nach Anspruch 6, dadurch gekennzeichnet, daß die reduzierte Abszisse (XE/l) des Krümmunngswendepunkts (E) entlang der Profilsehne und von der Vorderkante aus gerechnet durch folgenden Ausdruck gegeben ist

$$XE/l = 0,58333 + 0,91667 \, Cza - 1,1667(Cza)^2, \quad (3)$$

in welchem Cza der Wert des Adaptationsauftriebskoeffizienten ist.

8. Profil nach Anspruch 1, dadurch gekennzeichnet, daß die reduzierte Abszisse des Punkts mit der Krümmung Null des zweiten Abschnitts (3.2) der Profilunterseite durch die folgende Formel gegeben ist

$$X/l = a9(e/l) + a10(e/l)^2 + a11(e/l)^3 + a12(e/l)^4 + a13(e/l)^5, \quad (4)$$

in welcher bedeuten

— e/l maximale relative Dicke des Profils (1) und

— a9, a10, a11, a12 und a13 konstante Koeffizienten.

9. Profil nach Anspruch 8, dadurch gekennzeichnet, daß die konstanten Koeffizienten jeweils die folgenden Werte haben :

$a9 = -0,39176.10^3$

$a10 = +0,13407.10^5$

$a11 = -0,16845.10^6$

$a12 = +0,92807.10^6$

$a13 = -0,18878.10^7$

10. Profil nach Anspruch 1, in bekannter Weise definiert durch ein Dickenveränderungsgesetz und durch eine Mittellinie oder ein Skelett, dadurch gekennzeichnet, daß die reduzierten Ordinaten $Y/l$ und $Ye/l$ des Skeletts bzw. der Dicke als Funktionen der reduzierten Abszisse $X/l$ entlang der Sehne von der Vorderkante (A) aus gerechnet jeweils durch die folgenden Formeln gegeben sind :

$$Y/l = c1(X/l) + c2(X/l)^2 + c3(X/l)^3 + c4(X/l)^4 + c5(X/l)^5 + c6(X/l)^6 + c7(X/l)^7 \quad (5)$$

$$(6) \quad Ye/l = b1(X/l) + b2(X/l)^2 + b3(X/l)^3 + b4(X/l)^4 + b5(X/l)^5$$
$$+ b6(X/l)^6 + b7(X/l)^7 + b8(X/l)^8 + b9(X/l)^9 + b10(X/l)^{10},$$

in denen die verschiedenen Koeffizienten b1 bis b10 und c1 bis c7 konstant sind.

11. Profil nach Anspruch 10, dadurch gekennzeichnet, daß die verschiedenen konstanten Koeffizienten b1 bis b10 durch die nachstehenden Formeln gegeben sind :

$$b1 = b11(e/l) + b12(e/l)^2 + b13(e/l)^3 + b14(e/l)^4 + b15(e/l)^5 + b16(e/l)^6 \quad (7.1)$$
$$b2 = b21(e/l) + b22(e/l)^2 + b23(e/l)^3 + b24(e/l)^4 + b25(e/l)^5 + b26(e/l)^5 \quad (7.2)$$
$$b10 = b101(e/l) + b102(e/l)^2 + b103(e/l)^3 + b104(e/l)^4 + b105(e/l)^5 + b106(e/l)^6, \quad (7.10)$$

in denen $e/l$ die maximale relative Dicke des Profils ist und b11 bis b106 konstante Koeffizienten sind.

12. Profil nach Anspruch 11, dadurch gekennzeichnet, daß die konstanten Koeffizienten b11 bis b106 jeweils die folgenden Werte haben :

$b11 = +0,98542.10^5$

$b12 = -0,43028.10^7$

$b13 = +0,74825.10^8$

$b14 = -0,64769.10^9$

$b15 = +0,27908.10^{10}$

$b16 = -0,47889.10^{10}$

$b61 = -0,18709.10^{10}$

$b62 = +0,82093.10^{11}$

$b63 = -0,14340.10^{13}$

$b64 = +0,12464.10^{14}$

$b65 = -0,53912.10^{14}$

$b66 = +0,92831.10^{14}$

$$b21 = -0,33352.10^7$$

$$b22 = +0,14610.10^9$$

$$b23 = -0,25480.10^{10}$$

$$b24 = +0,22115.10^{11}$$

$$b25 = -0,95525.10^{11}$$

$$b26 = +0,16428.10^{12}$$

$$b31 = +0,39832.10^8$$

$$b32 = -0,17465.10^{10}$$

$$b33 = +0,30488.10^{11}$$

$$b34 = -0,26484.10^{12}$$

$$b35 = +0,11449.10^{13}$$

$$b36 = -0,19704.10^{13}$$

$$b41 = -0,24305.10^9$$

$$b42 = +0,10661.10^{11}$$

$$b43 = -0,18618.10^{12}$$

$$b44 = +0,16178.10^{13}$$

$$b45 = -0,69957.10^{13}$$

$$b46 = +0,12043.10^{14}$$

$$b51 = +0,86049.10^9$$

$$b52 = -0,37753.10^{11}$$

$$b71 = +0,25348.10^{10}$$

$$b72 = -0,11123.10^{12}$$

$$b73 = +0,19432.10^{13}$$

$$b74 = -0,16892.10^{14}$$

$$b75 = +0,73066.10^{14}$$

$$b76 = -0,12582.10^{15}$$

$$b81 = -0,20869.10^{10}$$

$$b82 = +0,91583.10^{11}$$

$$b83 = -0,16000.10^{13}$$

$$b84 = +0,13909.10^{14}$$

$$b85 = -0,60166.10^{14}$$

$$b86 = +0,10361.10^{15}$$

$$b91 = +0,95554.10^9$$

$$b92 = -0,41936.10^{11}$$

$$b93 = +0,73266.10^{12}$$

$$b94 = -0,63693.10^{13}$$

$$b95 = +0,27553.10^{14}$$

$$b96 = -0,47450.10^{14}$$

$$b101 = -0,18663.10^9$$

$$b102 = +0,81909.10^{10}$$

$$b53 = +0,65939.10^{12} \qquad b103 = -0,14311.10^{12}$$

$$b54 = -0,57309.10^{13} \qquad b104 = +0,12441.10^{13}$$

$$b55 = +0,24785.10^{14} \qquad b105 = -0,58321.10^{13}$$

$$b56 = -0,42674.10^{14} \qquad b106 = +0,92688.10^{13}$$

13. Profil nach Anspruch 10, dessen Skelett eine maximale relative Wölbung von –2% bis +5% aufweist, dadurch gekennzeichnet, daß die verschiedenen konstanten Koeffizienten c1 bis c7 durch die nachstehenden Formeln gegeben sind :

$$c1 = c11(e/l) + c12(e/l)^2 + c13(e/l)^3 + c14(e/l)^4 + c15(e/l)^5 + c16(e/l)^6 \qquad (8.1)$$
$$c2 = c21(e/l) + c22(e/l)^2 + c23(e/l)^3 + c24(e/l)^4 + c25(e/l)^5 + c26(e/l)^6 \qquad (8.2)$$
$$c7 = c71(e/l) + c72(e/l)^2 + c73(e/l)^3 + c74(e/l)^4 + c75(e/l)^5 + c76(e/l)^6, \qquad (8.7)$$

in welchen e/l die maximale relative Dicke des Profils ist und c11 bis c76 konstante Koeffizienten sind.

14. Profil nach Anspruch 13, dadurch gekennzeichnet, daß die kontanten Koeffizienten c11 bis c76 jeweils die folgenden Werte haben :

$$c11 = -0,29874.10^{1} \qquad c51 = -0,18750.10^{4}$$

$$c12 = -0,61332.10^{2} \qquad c52 = +0,72410.10^{5}$$

$$c13 = +0,60890.10^{5} \qquad c53 = +0,90745.10^{7}$$

$$c14 = -0,43208.10^{6} \qquad c54 = -0,54687.10^{9}$$

$$c15 = -0,12037.10^{9} \qquad c55 = +0,58423.10^{10}$$

$$c16 = +0,24680.10^{10} \qquad c56 = +0,50242.10^{11}$$

$$c21 = +0,17666.10^{2} \qquad c61 = +0,12366.10^{4}$$

$$c22 = +0,70530.10^{4} \qquad c62 = -0,43178.10^{5}$$

$$c23 = -0,40637.10^{6} \qquad c63 = -0,61307.10^{7}$$

$$c24 = -0,28310.10^{8} \qquad c64 = +0,33946.10^{9}$$

$$c25 = +0,20813.10^{10} \qquad c65 = -0,26651.10^{10}$$

$$c26 = -0,31463.10^{11} \qquad c66 = -0,49209.10^{11}$$

$$c31 = -0,38189.10^3 \qquad c71 = -0,31247.10^3$$

$$c32 = +0,31787.10^2 \qquad c72 = +0,83939.10^4$$

$$c33 = +0,23684.10^7 \qquad c73 = +0,16280.10^7$$

$$c34 = -0,47636.10^8 \qquad c74 = -0,74431.10^8$$

$$c35 = -0,26705.10^{-0} \qquad c75 = +0,30520.10^8$$

$$c36 = +0,65378.10^{11} \qquad c76 = +0,21265.10^{11}$$

$$c41 = +0,13180.10^4$$

$$c42 = -0,44650.10^5$$

$$c43 = -0,65945.10^7$$

$$c44 = +0,35822.10^9$$

$$c45 = -0,24986.10^{10}$$

$$c46 = -0,58675.10^{11}$$

15. Profil nach Anspruch 10, dadurch gekennzeichnet, daß die maximale Wölbung Kmax des Skeletts eines Profils als Funktion des Werts des Adaptationsauftriebskoeffizienten Cza durch folgende Formel bestimmt ist:

$$Kmax = d1(Cza) + d2(Cza)^2 + d3(Cza)^3 + d4(Cza)^4 + d5(Cza)^5 + d6(Cza)^6, \qquad (9)$$

in welcher d1 bis d6 konstante Koeffizienten sind.

16. Profil nach Anspruch 15, dadurch gekennzeichnet, daß die konstanten Koeffizienten d1 bis d6 die folgenden Werte haben :

$d1 = + 0,11017$
$d2 = - 0,30167$
$d3 = - 0,58541$
$d4 = + 0,39240.10$
$d5 = - 0,53223.10$
$d6 = + 0,22132.10$

17. Profil nach Anspruch 1 mit einer maximalen relativen Dicke von 9,5% und für einen Adaptationsauftriebskoeffizienten gleich 1, dadurch gekennzeichnet, daß jeweils als Funktion der reduzierten Abszisse X/I entlang der Sehne, von der Vorderkante (A) aus gerechnet,
— die reduzierten Ordinaten der oberen Profillinie gegeben sind
•zwischen X/I = 0 und X/I = 0,39433 durch die Formel

$$Y/I = f1(X/I)^{\frac{1}{2}} + f2(X/I) + f3(X/I)^2 + f4(X/I)^3 + f5(X/I)^4 + f6(X/I)^5 + f7(X/I)^6 \qquad (10)$$

mit
$f1 = + 0,16227$
$f2 = - 0,11704.10^{-1}$
$f3 = + 0,13247$
$f4 = - 0,25016.10$
$f5 = + 0,10682.10^2$

f6 = − 0,22210.10$^2$
f7 = + 0,17726.10$^2$

●zwischen X/l = 0,39433 und X/l = 1 durch die Formel

$$Y/l = g0 + g1(X/l) + g2(X/l)^2 + g3(X/l)^3 + g4(X/l)^4 + g5(X/l) + g6(X/l)^6 \quad (11)$$

mit
g0 = + 0,22968
g1 = − 0,17403.10
g2 = + 0,77952.10
g3 = − 0,17457.10$^2$
g4 = + 0,20845.10$^2$
g5 = − 0,13004.10$^2$
g6 = + 0,33371.10

— während die reduzierten Ordinaten der unteren Profillinie gegeben sind

●zwischen X/l = 0 und X/l = 0,11862 durch die Formel

$$Y/l = h1(X/l)^{\frac{1}{2}} + h2(X/l) + h3(X/l)^2 + h4(X/l)^3 + h5(X/l)^4 + h6(X/l)^5 + h7(X/l)^6 \quad (12)$$

mit
h1 = − 0,13971
h2 = + 0,10480.10$^{-3}$
h3 = + 0,51698.10
h4 = − 0,11297.10$^3$
h5 = + 0,14695.10$^4$
h6 = − 0,96403.10$^4$
h7 = + 0,24769.10$^5$

●zwischen X/l = 0,11862 und X/l = 1 durch die Formel

$$Y/l = i0 + i1(X/l) + i2(X/l)^2 + i3(X/l)^3 + i4(X/l)^4 + i5(X/l)^5 + i6(X/l)^6 \quad (13)$$

mit
i0 = − 0,25915.10$^{-1}$
i1 = − 0,96597.10$^{-1}$
i2 = + 0,49503
i3 = + 0,60418.10$^{-1}$
i4 = − 0,17206.10
i5 = + 0,20619.10
i6 = − 0,77922

18. Profil nach Anspruch 1 mit einer maximalen relativen Dicke von 10,2% und für einen Adaptationsauftriebskoeffizienten gleich 0,9, dadurch gekennzeichnet, daß jeweils als Funktion der reduzierten Abszisse X/l
entlang der Sehne, von der Vorderkante (A) aus gerechnet,
— die reduzierten Ordinaten der oberen Profillinie gegeben sind
●zwischen X/l = 0 und X/l = 0,39503 durch die Formel

$$Y/l = j1(X/l)^{\frac{1}{2}} + j2(X/l) + j3(X/l)^2 + j4(X/l)^3 + j5(X/l)^4 + j6(X/l)^5 + j7(X/l)^6 \quad (14)$$

mit
j1 = + 0,14683
j2 = − 0,67115.10$^{-2}$
j3 = + 0,44720
j4 = − 0,36828.10
j5 = + 0,12651.10$^2$
j6 = − 0,23835.10$^2$
j7 = + 0,18155.10$^2$

●zwischen X/l = 0,39503 und X/l = 1 durch die Formel

$$Y/l = k0 + k1(X/l) + k2(X/l)^2 + k3(X/l)^3 + k4(X/l)^4 + k5(X/l)^5 + k6(X/l)^6 \quad (15)$$

mit

k0 = + 0,45955

k1 = − 0,39834.10

k2 = + 0,16726.10$^2$

k3 = − 0,35737.10$^2$

k4 = + 0,41088.10$^2$

k5 = − 0,24557.10$^2$

k6 = + 0,60088.10

— während die reduzierten Ordinaten der unteren Profillinie gegeben sind

● zwischen X/l = 0 und X/l = 0,14473 durch die Formel

$$Y/l = m1(X/l)^{\frac{1}{2}} + m2(X/l) + m3(X/l)^2 + m4(X/l)^3 + m5(X/l)^4 + m6(X/l)^5 + m7(X/l)^6 \quad (16)$$

mit

m1 = − 0,13297

m2 = + 0,36163.10$^{-1}$

m3 = + 0,17284.10

m4 = − 0,27664.10$^2$

m5 = + 0,30633.10$^3$

m6 = − 0,16978.10$^4$

m7 = + 0,36477.10$^4$

● zwischen X/l = 0,14473 und X/l = 1 durch die Formel

$$Y/l = n0 + n1(X/l) + n2(X/l)^2 + n3(X/l)^3 + n4(X/l)^4 + n5(X/l)^5 + n6(X/l)^6 \quad (17)$$

mit

n0 = − 0,30824.10$^{-1}$

n1 = − 0,20564.10$^{-1}$

n2 = − 0,21738

n3 = + 0,24105.10

n4 = − 0,53752.10

n5 = + 0,48110.10

n6 = − 0,15826.10

19. Profil nach Anspruch 1 mit einer maximalen relativen Dicke von 11,7% und für einen Adaptationsauftriebskoeffizienten gleich 0,5, dadurch gekennzeichnet, daß jeweils als Funktion der reduzierten Abszisse X/l entlang der Sehne, von der Vorderkante (A) aus gerechnet,

— die reduzierten Ordinaten der oberen Profillinie gegeben sind

● zwischen X/l = 0 und X/l = 0,28515 durch die Formel

$$Y/l = t1(X/l)^{\frac{1}{2}} + t2(X/l) + t3(X/l)^2 + t4(X/l)^3 + t5(X/l)^4 + t6(X/l)^5 + t7(X/l)^6 \quad (18)$$

mit

t1 = + 0,21599

t2 = − 0,17294

t3 = + 0,22044.10

t4 = − 0,26595.10$^2$

t5 = + 0,14642.10$^3$

t6 = − 0,39764.10$^2$

t7 = + 0,42259.10$^3$

● zwischen X/l = 0,28515 und X/l = 1 durch die Formel

$$Y/l = u0 + u1(X/l) + u2(X/l)^2 + u3(X/l)^3 + u4(X/l)^4 + u5(X/l)^5 + u6(X/l)^6 \quad (19)$$

mit

u0 = + 0,39521.10$^{-1}$

u1 = + 0,26170

u2 = − 0,47274

u3 = − 0,40872

u4 = + 0,15968.10

u5 = − 0,15222.10

u6 = + 0,51057

— während die reduzierten Ordinaten der unteren Profillinie gegeben sind

• zwischen X/l = 0 und X/l = 0,17428 durch die Formel

$$Y/l = v1(X/l)^{\frac{1}{2}} + v2(X/l) + v3(X/l)^2 + v4(X/l)^3 + v5(X/l)^4 + v6(X/l)^5 + v7(X/l)^6 \quad (20)$$

mit

v1 = − 0,16526

v2 = − 0,31162.10⁻¹

v3 = + 0,57567.10

v4 = − 0,10148.10³

v5 = + 0,95843.10³

v6 = − 0,44161.10⁴

v7 = + 0,78519.10⁴

• zwischen X/l = 0,17428 und X/l = 1 durch die Formel

$$Y/l = w0 + w1(X/l) + w2(X/l)^2 + w3(X/l)^3 + w4(X/l)^4 + w5(X/l)^5 + w6(X/l)^6 \quad (21)$$

mit

w0 = − 0,25152.10⁻¹

w1 = − 0,22525

w2 = + 0,89038

w3 = − 0,10131.10

w4 = + 0,16240

w5 = + 0,46968

w6 = − 0,26400

20. Profil nach Anspruch 1 mit einer maximalen relativen Dicke von 12% und für einen Adaptationsauftriebskoeffizienten gleich 0,6, dadurch gekennzeichnet, daß jeweils als Funktion der reduzierten Abszisse X/l entlang der Sehne, von der Vorderkante (A) aus gerechnet,

— die reduzierten Ordinaten der oberen Profillinie gegeben sind

• zwischen X/l = 0 und X/l = 0,29461 durch die Formel

$$Y/l = p1(X/l)^{\frac{1}{2}} + p2(X/l) + p3(X/l)^2 + p4(X/l)^3 + p5(X/l)^4 + p6(X/l)^5 + p7(X/l)^6 \quad (22)$$

mit

p1 = + 0,16347

p2 = + 0,20845

p3 = − 0,20506.10

p4 = + 0,13223.10²

p5 = − 0,63791.10²

p6 = + 0,16200.10³

p7 = − 0,16302.10³

• zwischen X/l = 0,29461 und X/l = 1 durch die Formel

$$Y/l = q0 + q1(X/l) + q2(X/l)^2 + q3(X/l)^3 + q4(X/l)^4 + q5(X/l)^5 + q6(X/l)^6 \quad (23)$$

mit

q0 = + 0,54860.10⁻¹

q1 = + 0,13872

q2 = + 0,16460

q3 = − 0,17424.10

q4 = + 0,28085.10

q5 = − 0,19062.10

q6 = + 0,48442

— während die reduzierten Ordinaten der unteren Profillinie gegeben sind

• zwischen X/l = 0 und X/l = 0,14931 durch die Formel

$$Y/l = r1(X/l)^{\frac{1}{2}} + r2(X/l) + r3(X/l)^2 + r4(X/l)^3 + r5(X/l)^4 + r6(X/l)^5 + r7(X/l)^6 \quad (24)$$

mit

$r1 = -0,19086$

$r2 = +0,29842$

$r3 = -0,51359.10$

$r4 = +0,11144.10^3$

$r5 = -0,11384.10^4$

$r6 = +0,56797.10^4$

$r7 = -0,11091.10^5$

• zwischen X/l = 0,14931 und X/l = 1 durch die Formel

$$Y/l = s0 + s1(X/l) + s2(X/l)^2 + s3(X/l)^3 + s4(X/l)^4 + s5(X/l)^5 + s6(X/l)^6 \quad (25)$$

mit

$s0 = -0,31248.10^{-1}$

$s1 = -0,12350$

$s2 = +0,42720$

$s3 = +0,32923$

$s4 = -0,19650.10$

$s5 = +0,21099.10$

$s6 = -0,74935$

21. Profil nach Anspruch 1 mit einer maximalen relativen Dicke von 12,8% und für einen Adaptationsauftriebskoeffizienten gleich 0,2, dadurch gekennzeichnet, daß jeweils als Funktion der reduzierten Abszisse X/l entlang der Sehne, von der Vorderkante (A) aus gerechnet,

— die reduzierten Ordinaten der oberen Profillinie gegeben sind

• zwischen X/l = 0 und X/l = 0,26861 durch die Formel

$$Y/l = \alpha 1(X/l)^{\frac{1}{2}} + \alpha 2(X/l) + \alpha 3(X/l)^2 + \alpha 4(X/l)^3 + \alpha 5(X/l)^4 + \alpha 6(X/l)^5 + \alpha 7(X/l)^6 \quad (26)$$

mit

$\alpha 1 = +0,19762$

$\alpha 2 = +0,17213$

$\alpha 3 = -0,53137.10$

$\alpha 4 = +0,56025.10^2$

$\alpha 5 = -0,32319.10^3$

$\alpha 6 = +0,92088.10^3$

$\alpha 7 = -0,10229.10^4$

• zwischen X/l = 0,26861 und X/l = 1 durch die Formel

$$Y/l = \beta 0 + \beta 1(X/l) + \beta 2(X/l)^2 + \beta 3(X/l)^3 + \beta 4(X/l)^4 + \beta 5(X/l)^5 + \beta 6(X/l)^6 \quad (27)$$

mit

$\beta 0 = +0,28900.10^{-1}$

$\beta 1 = +0,38869$

$\beta 2 = -0,10796.10$

$\beta 3 = +0,80848$

$\beta 4 = +0,45025$

$\beta 5 = -0,10636.10$

$\beta 6 = +0,47182$

— während die reduzierten Ordinaten der unteren Profillinie gegeben sind

• zwischen X/l = 0 und X/l = 0,20934 durch die Formel

$$Y/l = \gamma 1(X/l)^{\frac{1}{2}} + \gamma 2(X/l) + \gamma 3(X/l)^2 + \gamma 4(X/l)^3 + \gamma 5(X/l)^4 + \gamma 6(X/l)^5 + \gamma 7(X/l)^6 \quad (28)$$

mit

$\gamma 1 = -0,25376$

$\gamma 2 = +0,61860$

$\gamma 3 = -0,96212.10$

$\gamma 4 = +0,12843.10^3$

$\gamma 5 = -0,90701.10^3$

$\gamma 6 = +0,32291.10^4$

$\gamma 7 = -0,45418.10^4$

● zwischen X/l = 0,20934 und X/l = 1 durch die Formel

$$Y/l = \delta 0 + \delta 1(X/l) + \delta 2(X/l)^2 + \delta 3(X/l)^3 + \delta 4(X/l)^4 + \delta 5(X/l)^5 + \delta 6(X/l)^6 \quad (29)$$

mit

$\delta 0 = -0,25234.10^{-1}$

$\delta 1 = -0,32905$

$\delta 2 = +0,10890.10$

$\delta 3 = -0,10066.10$

$\delta 4 = -0,32520$

$\delta 5 = +0,11325.10$

$\delta 6 = -0,54043$

22. Profil nach Anspruch 1 mit einer maximalen relativen Dicke von 13,9% und für einen Adaptationsauftriebskoeffizienten gleich – 0,1, dadurch gekennzeichnet, daß jeweils als Funktion der reduzierten Abszisse X/l entlang der Sehne, von der Vorderkante (A) aus gerechnet,

— die reduzierten Ordinaten der oberen Profillinie gegeben sind

● zwischen X/l = 0 und X/l = 0,19606 durch die Formel

$$Y/l = \varepsilon 1(X/l)^{\frac{1}{2}} + \varepsilon 2(X/l) + \varepsilon 3(X/l)^2 + \varepsilon 4(X/l)^3 + \varepsilon 5(X/l)^4 + \varepsilon 6(X/l)^5 + \varepsilon 7(X/l)^6 \quad (30)$$

mit

$\varepsilon 1 = +0,22917$

$\varepsilon 2 = -0,22972$

$\varepsilon 3 = +0,21262.10$

$\varepsilon 4 = -0,39557.10^2$

$\varepsilon 5 = +0,32628.10^3$

$\varepsilon 6 = -0,13077.10^4$

$\varepsilon 7 = +0,20370.10^4$

● zwischen X/l = 0,19606 und X/l = 1 durch die Formel

$$Y/l = \lambda 0 + \lambda 1(X/l) + \lambda 2(X/l)^2 + \lambda 3(X/l)^3 + \lambda 4(X/l)^4 + \lambda 5(X/l)^5 + \lambda 6(X/l)^6 \quad (31)$$

mit

$\lambda 0 = +0,32500.10^{-1}$

$\lambda 1 = +0,29684$

$\lambda 2 = -0,99973$

$\lambda 3 = +0,82973$

$\lambda 4 = +0,40616$

$\lambda 5 = -0,10053.10$

$\lambda 6 = +0,44222$

— während die reduzierten Ordinaten der unteren Profillinie gegeben sind

● zwischen X/l = 0 und X/l = 0,26478 durch die Formel

$$Y/l = \mu 1(X/l)^{\frac{1}{2}} + \mu 2(X/l) + \mu 3(X/l)^2 + \mu 4(X/l)^3 + \mu 5(X/l)^4 + \mu 6(X/l)^5 + \mu 7(X/l)^6 \quad (32)$$

mit

$\mu 1 = -0,19314$

$\mu 2 = -0,22031$

$\mu 3 = +0,44399.10$

$\mu 4 = -0,41389.10^2$

$\mu 5 = +0,23230.10^3$

$\mu 6 = -0{,}66179.10^3$
$\mu 7 = +0{,}74216.10^3$
• zwischen X/l = 0,26478 und X/l = 1 durch die Formel

$$Y/l = \nu 0 + \nu 1(X/l) + \nu 2(X/l)^2 + \nu 3(X/l)^3 + \nu 4(X/l)^4 + \nu 5(X/l)^5 + \nu 6(X/l)^6 \quad (33)$$

mit
$\nu 0 = -0{,}42417.10^{-1}$
$\nu 1 = -0{,}29161$
$\nu 2 = +0{,}57883$
$\nu 3 = +0{,}41309$
$\nu 4 = -0{,}19045.10$
$\nu 5 = +0{,}18776.10$
$\nu 6 = -0{,}63583$

23. Profil nach Anspruch 1, dadurch gekennzeichnet, daß es benützt wird für Adaptationsmachzahlen Mad, die als Funktion der maximalen relativen Dicke e/l des Profils nach der folgenden Formel variieren

$$Mad = \phi 0 + \phi 1(e/l) \quad (34)$$

mit
$\phi 0 = -0{,}88636.10$
$\phi 1 = +0{,}15320.10$

## Claims

1. Profile (1) for shrouded propeller blade, of which the relative thickness is included between 9% and 15%, characterized in that, the curvature of said profile having a maximum value at the leading edge (A) thereof included between 47 and 98 as a function of said relative thickness, the extrados line (2) of said profile comprises, from the leading edge (A) to the trailing edge (C), three successive portions (2.1, 2.2 and 2.3), such that
— in the first portion (2.1), the curvature decreases rapidly from said maximum value at the leading edge to a value close to 20 at a first point (B) of which the reduced abscissa along the chord of the profile, counted from the leading edge, is close to 1% ;
— in the second portion (2.2), the curvature decreases more slowly from said value close to 20 at said first point (B) up to a value close to 1 at a second point (D), of which the reduced abscissa along said chord, counted from the leading edge, is close to 25% ; and
— in the third portion (2.3), the curvature is less than 1 between said second point (D) and said trailing edge (C),
whilst the intrados line (3) of said profile comprises, from the leading edge (A) to the trailing edge (F), three successive portions (3.1, 3.2 and 3.3), such that
— in the first portion (3.1), the curvature decreases from said maximum value at the leading edge to a value close to 11 at a third point (G) of which the reduced abscissa along the chord of the profile, counted from said leading edge, is close to 2% ;
— in the second portion (3.2), which extends from said third point (G) up to a fourth point (H) of which the reduced abscissa along the chord of the profile, counted from said leading edge, is included between 30 and 70%, the curvature continues to decrease from this value close to 11 until it is reduced to zero ; and
— in the third portion (3.3), the curvature is negative and less than 1 in absolute value, up to the trailing edge (F).

2. Profile according to claim 1, characterized in that the value COA of the curvature at the leading edge (A), with respect to the length l of the chord of the profile, is given by the expression

$$COA = a1(e/l) + a2(e/l)^2 + a3(e/l)^3 + a4(e/l)^4 + a5(e/l)^5 \quad (1)$$

in which
— e/l is the maximum relative thickness of the profile (1), and
— a1, a2, a3, a4 and a5 are constant coefficients.

3. Profile according to claim 2,

characterized in that said constant coefficients have the following respective values :

$a1 = -0.2936.10^6$

$a2 = +0.99839.10^7$

$a3 = -0.12551.10^9$

$a4 = +0.69412.10^9$

$a5 = -0.14276.10^{10}$

4. Profile according to claim 1,

characterized in that, along said second portion (2.2) of extrados, the curvature (CO) is given by the expression

$$CO^{\frac{1}{2}} = a6 + a7(X/l)^{\frac{1}{2}} + a8(X/l), \quad (2)$$

in which a6, a7 and a8 are constant coefficients, X/l being the reduced abscissa along the chord of the profile, counted from the leading edge, of any point of this second portion.

5. Profile according to claim 4, characterized in that said constant coefficients have the following respective values :

$a6 = +0.72957.10$

$a7 = -0.31509.10^2$

$a8 = +0.37217.10^2$

6. Profile according to claim 1 and of which the coefficient of lift of adaptation is less than 0.3,

characterized in that said third portion (2.3) of extrados comprises a point (E) of inversion of curvature, of which the reduced abscissa along the chord of the profile, counted from the leading edge, is included between 45% and 85%.

7. Profile according to claim 6,

characterized in that the reduced abscissa (XE/l) of said point (E) of inversion of curvature, along the chord of said profile and counted from the leading edge, is given by the expression

$$XE/l = 0.58333 + 0.91667\ Cza - 1.1667\ (Cza)^2 \quad (3)$$

in which Cza is the value of the coefficient of lift of adaptation.

8. Profile according to claim 1,

characterized in that the reduced abscissa of the point of zero curvature of said second portion (3.2) of intrados is given by the formula

$$X/l = a9(e/l) + a10(e/l)^2 + a11(e/l)^3 + a12(e/l)^4 + a13(e/l)^5 \quad (4)$$

in which

— e/l is the maximum relative thickness of the profile (1) and

— a9, a10, a11, a12 and a13 are constant coefficients.

9. Profile according to claim 8,

characterized in that said constant coefficients present the following respective values :

$a9 = -0.39176.10^3$

$a10 = +0.13407.10^5$

$a11 = -0.16845.10^6$

$a12 = +0.92807.10^6$

$a13 = -0.18878.10^7$

10. Profile according to claim 1, defined in known manner from a law of variation of thickness and from a median line,

characterized in that, as a function of the reduced abscissa X/l along the chord counted from the leading edge (A), the reduced ordinates Y/l and Ye/l of said median line and of said thickness are respectively given by the following formulae :

$$Y/l = c1(X/l) + c2(X/l)^2 + c3(X/l)^3 + c4(X/L)^4 + c5(X/l)^5 + c6(X/l)^6 + c7(X/l)^7 \quad (5)$$

$$(6)\ Ye/l = b1(X/l) + b2(X/l)^2 + b3(X/l)^3 + b4(X/l)^4 + b5(X/l)^5 + b6(X/l)^6 + b7(X/l)^7 + b8(X/l)^8 + b9(X/l)^9 + b10(X/l)^{10}$$

in which the different coefficients b1 to b10 and c1 to c7 are constant.

11. Profile according to claim 10,
characterized in that the different constant coefficients b1 to b10 are given by the formulae hereinafter :

$$b1 = b11(e/l) + b12(e/l)^2 + b13(e/l)^3 + b14(e/l)^4 + b15(e/l)^5 + b16(e/l)^6 \quad (7.1)$$
$$b2 = b21(e/l) + b22(e/l)^2 + b23(e/l)^3 + b24(e/l)^4 + b25(e/l)^5 + b26(e/l)^6 \quad (7.2)$$
$$b10 = b101(e/l) + b102(e/l)^2 + b103(e/l)^3 + b104(e/l)^4 + b105(e/l)^5 + b106(e/l)^6 \quad (7.10)$$

in which e/l is the maximum reduced thickness of said profile and b11 to 106 are constant coefficients.

12. Profile according to claim 11,
characterized in that the constant coefficients b11 to b106 have the following respective values :

$$b11 = +0,98542.10^5 \qquad\qquad b61 = -0,18709.10^{10}$$
$$b12 = -0,43028.10^7 \qquad\qquad b62 = +0,82093.10^{11}$$
$$b13 = +0,74825.10^6 \qquad\qquad b63 = -0,14340.10^{13}$$
$$b14 = -0,64769.10^9 \qquad\qquad b64 = +0,12464.10^{14}$$
$$b15 = +0,27908.10^{10} \qquad\qquad b65 = -0,53912.10^{14}$$
$$b16 = -0,47889.10^{10} \qquad\qquad b66 = +0,92831.10^{14}$$

$$b21 = -0,33352.10^7 \qquad\qquad b71 = +0,25348.10^{10}$$
$$b22 = +0,14610.10^9 \qquad\qquad b72 = -0,11123.10^{12}$$
$$b23 = -0,25480.10^{10} \qquad\qquad b73 = +0,19432.10^{13}$$
$$b24 = +0,22115.10^{11} \qquad\qquad b74 = -0,16892.10^{14}$$
$$b25 = -0,95525.10^{11} \qquad\qquad b75 = +0,73066.10^{14}$$
$$b26 = +0,16428.10^{12} \qquad\qquad b76 = -0,12582.10^{15}$$

$$b31 = +0,39832.10^8 \qquad\qquad b81 = -0,20869.10^{10}$$
$$b32 = -0,17465.10^{10} \qquad\qquad b82 = +0,91583.10^{11}$$
$$b33 = +0,30488.10^{11} \qquad\qquad b83 = -0,16000.10^{13}$$
$$b34 = -0,26484.10^{12} \qquad\qquad b84 = +0,13909.10^{14}$$
$$b35 = +0,11449.10^{13} \qquad\qquad b85 = -0,60166.10^{14}$$
$$b36 = -0,19704.10^{13} \qquad\qquad b86 = +0,10361.10^{15}$$

$$b41 = -0,24305.10^9$$
$$b42 = +0,10661.10^{11}$$
$$b43 = -0,18618.10^{12}$$
$$b44 = +0,16178.10^{13}$$
$$b45 = -0,69957.10^{13}$$
$$b46 = +0,12043.10^{14}$$
$$b51 = +0,86049.10^9$$
$$b52 = -0,37753.10^{11}$$
$$b53 = +0,65939.10^{12}$$
$$b54 = -0,57309.10^{13}$$
$$b55 = +0,24785.10^{14}$$
$$b56 = -0,42674.10^{14}$$

$$b91 = +0,95554.10^9$$
$$b92 = -0,41936.10^{11}$$
$$b93 = +0,73266.10^{12}$$
$$b94 = -0,63693.10^{13}$$
$$b95 = +0,27553.10^{14}$$
$$b96 = -0,47450.10^{14}$$
$$b101 = -0,18663.10^9$$
$$b102 = +0,81909.10^{10}$$
$$b103 = -0,14311.10^{12}$$
$$b104 = +0,12441.10^{13}$$
$$b105 = -0,58321.10^{13}$$
$$b106 = +0,92688.10^{13}$$

13. Profile according to claim 10, of which the median line presents a maximum relative curvature of between −2% and +5%,
characterized in that the different constant coefficients c1 to c7 are given by the following formulae :

$$c1 = c11(e/l) + c12(e/l)^2 + c13(e/l)^3 + c14(e/l)^4 + c15(e/l)^5 + c16(e/l)^6 \quad (8.1)$$
$$c2 = c21(e/l) + c22(e/l)^2 + c23(e/l)^3 + c24(e/l)^4 + c21(e/l)^5 + c26(e/l)^6 \quad (8.2)$$
$$c7 = c71(e/l) + c72(e/l)^2 + c73(e/l)^3 + c74(e/l)^4 + c75(e/l)^5 + c76(e/l)^6 \quad (8.7)$$

in which e/l is the maximum reduced thickness of said profile and c11 to c76 are constant coefficients.

14. Profile according to claim 13,
characterized in that the constant coefficients c11 to c76 have the following values :

$$c11 = -0,29874.10$$
$$c12 = -0,61332.10^2$$
$$c13 = +0,60890.10^5$$
$$c14 = -0,43208.10^6$$
$$c15 = -0,12037.10^9$$
$$c16 = +0,24680.10^{10}$$

$$c51 = -0,18750.10^4$$
$$c52 = +0,72410.10^5$$
$$c53 = +0,90745.10^7$$
$$c54 = -0,54687.10^9$$
$$c55 = +0,58423.10^{10}$$
$$c56 = +0,50242.10^{11}$$

$$c21 = +0,17666.10^2$$
$$c22 = +0,70530.10^4$$
$$c23 = -0,40637.10^6$$
$$c24 = -0,28310.10^8$$
$$c25 = +0,20813.10^{10}$$
$$c26 = -0,31463.10^{11}$$

$$c61 = +0,12366.10^4$$
$$c62 = -0,43178.10^5$$
$$c63 = -0,61307.10^7$$
$$c64 = +0,33946.10^9$$
$$c65 = -0,26651.10^{10}$$
$$c66 = -0,49209.10^{11}$$

$$c_{31} = -0,38189.10^3$$

$$c_{32} = +0,31787.10^2$$

$$c_{33} = +0,23684.10^7$$

$$c_{34} = -0,47636.10^8$$

$$c_{35} = -0,26705.10^{10}$$

$$c_{36} = +0,65378.10^{11}$$

$$c_{71} = -0,31247.10^3$$

$$c_{72} = +0,83939.10^4$$

$$c_{73} = +0,16280.10^7$$

$$c_{74} = -0,74431.10^8$$

$$c_{75} = +0,30520.10^8$$

$$c_{76} = +0,21265.10^{11}$$

$$c_{41} = +0,13180.10^4$$

$$c_{42} = -0,44650.10^5$$

$$c_{43} = -0,65945.10^7$$

$$c_{44} = +0,35822.10^9$$

$$c_{45} = -0,24986.10^{10}$$

$$c_{46} = -0,58675.10^{11}$$

15. Profile according to claim 10,
characterized in that the maximum camber Kmax of the median line of a profile is determined, as a function of the value of the coefficient of lift of adaptation Cza, by the formula

$$Kmax = d_1(Cza) + d_2(Cza)^2 + d_3(Cza)^3 + d_4(Cza)^4 + d_5(Cza)^5 + d_6(Cza)^6 \quad (9)$$

in which d1 to d6 are constant coefficients.

16. Profile according to claim 15,
characterized in that the constant coefficients d1 to d6 have the following values :

d1 = + 0.11017
d2 = – 0.30167
d3 = – 0.58541
d4 = + 0.39240.10
d5 = – 0.53223.10
d6 = + 0.22132.10

17. Profile according to claim 1, having a maximum relative thickness equal to 9.5% and for a coefficient of lift of adaptation equal to 1,
characterized in that, as a function of the reduced abscissa X/l along the chord, counted from the leading edge (A),
— the reduced ordinates of extrados line are given
• between X/l = 0 and X/l = 0.39433, by the formula

$$Y/l = f_1(X/11)^{\frac{1}{2}} + f_2(X/l) + f_3(X/l)^2 + f_4(X/l)^3 + f_5(X/l)^4 + f_6(X/l)^5 + f_7(X/l)^6 \quad (10)$$

with
f1 = + 0.16227
f2 = – 0.11704.10^{-1}
f3 = + 0.13247
f4 = – 0.25016.10
f5 = + 0.10682.10^2
f6 = – 0.22210.10^2
f7 = + 0.17726.10^2
• between X/l = 0.39433 and X/l = 1, by the formula

$$Y/l = g0 + g1(X/l) + g2(X/l)^2 + g3(X/l)^3 + g4(X/l)^4 + g5(X/l)^5 + g6(X/l)^6 \quad (11)$$

with

g0 = + 0.22968
g1 = − 0.17403.10
g2 = + 0.77952.10
g3 = − 0.17457.10²
g4 = + 0.20845.10²
g5 = − 0.13004.10²
g6 = + 0.33371.10

— whilst the reduced ordinates of the intrados line of said profile are given

• between X/l = 0 and X/l = 0.11862, by the formula

$$Y/l = h1(X/l)^{\frac{1}{2}} + h2(X/l) + h3(X/1)^2 + h4(X/1)^3 + h5(X/l)^4 + h6(X/l)^5 + h7(X/l)^6 \quad (12)$$

with

h1 = − 0.13971
h2 = + 0.10480.10⁻³
h3 = + 0.51698.10
h4 = − 0.11297.10³
h5 = + 0.14695.10⁴
h6 = − 0.96403.10⁴
h7 = + 0.24769.10⁵

• between X/l = 0.11862 and X/l = 1, by the formula

$$Y/l = i0 + i1(X/l) + i2(X/l)^2 + i3(X/l)^3 + i4(X/l)^4 + +i5(X/l)^5 + i6(X/l)^6 \quad (13)$$

with

i0 = − 0.25915.10⁻¹
i1 = − 0.96597.10⁻¹
i2 = + 0.49503
i3 = + 0.60418.10⁻¹
i4 = − 0.17206.10
i5 = + 0.20619.10
i6 = − 0.77922

18. Profile according to claim 1, having a maximum relative thickness equal to 10.2% and for a coefficient of lift of adaptation equal to 0.9,
characterized in that, as a function of the reduced abscissa X/l along the chord, counted from the leading edge (A),

— the reduced ordinates of the extrados line are given

• between X/l = 0 and X/l = 0.39503, by the formula

$$Y/l = j1(X/l))^{\frac{1}{2}} + j2(X/l) + j3(X/l)^2 + j4(X/l)^3 + j5(X/l)^4 + j6(X/l)^5 + j7(X/l)^6 \quad (14)$$

with

j1 = + 0.14683
j2 = − 0.67115.10⁻²
j3 = + 0.44720
j4 = − 0.36828.10
j5 = + 0.12651.10²
j6 = − 0.23835.10²
j7 = + 0.18155.10²

• between X/l = 0.39503 and X/l = 1, by the formula

$$Y/l = k0 + k1(X/l) + k2(X/l)^2 + k3(X/l)^3 + k4(X/l)^4 + k5(X/l)^5 + k6(X/l)^6 \quad (15)$$

with

k0 = + 0.45955
k1 = − 0.39834.10
k2 = + 0.16726.10$^2$
k3 = − 0.35737.10$^2$
k4 = + 0.41088.10$^2$
k5 = − 0.24557.10$^2$
k6 = + 0.60088.10
— whilst the reduced ordinates of the intrados line of said profile are given
● between X/l = 0 and X/l = 0.14473, by the formula

$$Y/l = m1(X/l)^{\frac{1}{2}} + m2(X/l) + m3(X/l)^2 + m4(X/l)^3 + m5(X/l)^4 + m6(X/l)^5 + m7(X/l)^6 \quad (16)$$

with
m1 = − 0.13297
m2 = + 0.36163.10$^{-1}$
m3 = + 0.17284.10
m4 = − 0.27664.10$^2$
m5 = + 0.30633.10$^3$
m6 = − 0.16978.10$^4$
m7 = + 0.36477.10$^4$
● between X/l = 0.14473 and X/l = 1, by the formula

$$Y/l = n0 + n1(X/l) + n2(X/l)^2 + n3(X/l)^3 + n4(X/l)^4 + n5(X/l)^5 + n6(X/l)^6 \quad (17)$$

with
n0 = − 0.30824.10$^{-1}$
n1 = − 0.20564.10$^{-1}$
n2 = − 0.21738
n3 = + 0.24105.10
n4 = − 0.53752.10
n5 = + 0.48110.10
n6 = − 0.15826.10

19. Profile according to claim 1, having a maximum relative thickness equal to 11.7% and for a coefficient of lift of adaptation equal to 0.5,
characterized in that, as a function of the reduced abscissa X/l along the chord, counted from the leading edge (A),
— the reduced ordinates of the extrados line are given
● between X/l = 0 and X/l = 0.28515, by the formula

$$Y/l = t1(X/l)^{\frac{1}{2}} + t2(X/l) + t3(X/l)^2 + t4(X/l)^3 + t5(X/l)^4 + t6(X/l)^5 + t7(X/l)^6 \quad (18)$$

with
t1 = + 0.21599
t2 = − 0.17294
t3 = + 0.22044.10
t4 = − 0.26595.10$^2$
t5 = + 0.14642.10$^3$
t6 = − 0.39764.10$^3$
t7 = + 0.42259.10$^3$
between X/l = 0.28515 and X/l = 1, by the formula

$$Y/l = u0 + u1(X/l) + u2(X/l)^2 + u3(X/l)^3 + u4(X/l)^4 + u5(X/l)^5 + u6(X/l)^6 \quad (19)$$

with
u0 = + 0.39521.10$^{-1}$
u1 = + 0.26170
u2 = − 0.47274
u3 = − 0.40872

u4 = + 0.15968.10
u5 = − 0.15222.10
u6 = + 0.51057
— whilst the reduced ordinates of the intrados line of said profile are given
between X/l = 0 and X/l = 0.17428, by the formula

$$Y/l = v1(X/l)^{\frac{1}{2}} + v2(X/l) + v3(X/l)^2 + v4(X/l)^3 + v5(X/l)^4 + v6(X/l)^5 + v7(X/l)^6 \quad (20)$$

with
v1 = − 0.16526
v2 = − 0.31162.10⁻¹
v3 = + 0.57567.10
v4 = − 0.10148.10³
v5 = + 0.95843.10³
v6 = − 0.44161.10⁴
v7 = + 0.78519.10⁴
between X/l = 0.17428 and X/l = 1, by the formula

$$Y/l = w0 + w1(X/l) + w2(X/l)^2 + w3(X/l)^3 + w4(X/l)^4 + w5(X/l)^5 + w6(X/l)^6 \quad (21)$$

with
w0 = − 0.25152.10⁻¹
w1 = − 0.22525
w2 = + 0.89038
w3 = − 0.10131.10
w4 = + 0.16240
w5 = + 0.46968
w6 = − 0.26400

20. Profile according to claim 1, having a maximum relative thickness equal to 12% and for a coefficient of lift of adaptation equal to 0.6,
characterized in that, as a function of the reduced abscissa X/l along the chord, counted from the leading edge (A),
— the reduced ordinates of the extrados line are given
● between X/l = 0 and X/l = 0.29461, by the formula

$$Y/l = p1(X/l)^{\frac{1}{2}} + p2(X/l) + p3(X/l)^2 + p4(X/l)^3 + p5(X/l)^4 + p6(X/l)^5 + p7(X/l)^6 \quad (22)$$

with
p1 = + 0.16347
p2 = + 0.20845
p3 = − 0.20506.10
p4 = + 0.13223.10²
p5 = − 0.63791.10²
p6 = + 0.16200.10³
p7 = − 0.16302.10³
● between X/l = 0.29461 and X/l = 1, by the formula

$$Y/l = q0 + q1(X/l) + q2(X/l)^2 + q3(X/l)^3 + q4(X/l)^4 + q5(X/l)^5 + q6(X/l)^6 \quad (23)$$

with
q0 = + 0.54860.10⁻¹
q1 = + 0.13872
q2 = + 0.16460
q3 = − 0.17424.10
q4 = + 0.28085.10
q5 = − 0.19062.10
q6 = + 0.48442
whilst the reduced ordinates of the intrados line of said profile are given

46

● between X/l = 0 and X/l = 0.14931, by the formula

$$Y/l = r1(X/l)^{\frac{1}{2}} + r2(X/l) + r3(X/l)^2 + r4(X/l)^3 + r5(X/l)^4 + r6(X/l)^5 + r7(X/l)^6 \quad (24)$$

with
r1 = − 0.19086
r2 = + 0.29842
r3 = − 0.51359.10
r4 = + 0.11144.10³
r5 = − 0.11384.10⁴
r6 = + 0.56797.10⁴
r7 = − 0.11091.10⁵
● between X/l = 0.14931 and X/l = 1, by the formula

$$Y/l = s0 + s1(X/l) + s2(X/l)^2 + s3(X/l)^3 + s4(X/l)^4 + s5(X/l)^5 + s6(X/l)^6 \quad (25)$$

with
s0 = − 0.31248.10⁻¹
s1 = − 0.12350
s2 = + 0.42720
s3 = + 0.32923
s4 = − 0.19650.10
s5 = + 0.21099.10
s6 = − 0.74935

21. Profile according to claim 1, having a maximum relative thickness equal to 12.8% and for a coefficient of lift of adaptation equal to 0.2,
characterized in that, as a function of the reduced abscissa X/l along the chord, counted from the leading edge (A),
— the reduced ordinates of the extrados line are given
● between X/l = 0 and X/l = 0.26861, by the formula

$$Y/l = \alpha1(X/l)^{\frac{1}{2}} + \alpha2(X/l) + \alpha3(X/l)^2 + \alpha4(X/l)^3 + \alpha5(X/l)^4 + \alpha6(X/l)^5 + \alpha7(X/l)^6 \quad (26)$$

with
$\alpha1$ = + 0.19762
$\alpha2$ = + 0.17213
$\alpha3$ = − 0.53137.10
$\alpha4$ = + 0.56025.10²
$\alpha5$ = − 0.32319.10³
$\alpha6$ = + 0.92088.10³
$\alpha7$ = − 0.10229.10⁴
● between X/l = 0.26861 and X/l = 1, by the formula

$$Y/l = \beta0 + \beta1(X/l) + \beta2(X/l)^2 + \beta3(X/l)^3 + \beta4(X/l)^4 + \beta5(X/l)^5 + \beta6(X/l)^6 \quad (27)$$

with
$\beta0$ = + 0.28900.10⁻¹
$\beta1$ = + 0.38869
$\beta2$ = − 0.10796.10
$\beta3$ = + 0.80848
$\beta4$ = + 0.45025
$\beta5$ = − 0.10636.10
$\beta6$ = + 0.47182
— whilst the reduced ordinates of the intrados line of said profile are given
● between X/l = 0 and X/l = 0.20934, by the formula

$$Y/l = \gamma1(X/l)^{\frac{1}{2}} + \gamma2(X/l) + \gamma3(X/l)^2 + \gamma4(X/l)^3 + \gamma5(X/l)^4 + \gamma6(X/l)^5 + \gamma7(X/l)^6 \quad (28)$$

with

$\gamma 1 = - 0.25376$

$\gamma 2 = + 0.61860$

$\gamma 3 = - 0.96212.10$

$\gamma 4 = + 0.12843.10^3$

$\gamma 5 = - 0.90701.10^3$

$\gamma 6 = + 0.32291.10^4$

$\gamma 7 = - 0.45418.10^4$

between X/l = 0.20934 and X/l = 1, by the formula

$$Y/l = \delta 0 + \delta 1(X/l) + \delta 2(X/l)^2 + \delta 3(X/l)^3 + \delta 4(X/l)^4 + \delta 5(X/l)^5 + \delta 6(X/l)^6 \quad (29)$$

with

$\delta 0 = - 0.25234.10^{-1}$

$\delta 1 = - 0.32905$

$\delta 2 = + 0.10890.10$

$\delta 3 = - 0.10066.10$

$\delta 4 = - 0.32520$

$\delta 5 = + 0.11325.10$

$\delta 6 = - 0.54043$

22. Profile according to claim 1, having a maximum relative thickness equal to 13.9% and for a coefficient of lift of adaptation equal to – 0.1,

characterized in that as a function of the reduced abscissa X/l along the chord, counted from the leading edge (A),

— the reduced ordinates of the extrados line are given

• between X/l = 0 and X/l = 0.19606, by the formula

$$Y/l = \varepsilon 1(X/l)^{\frac{1}{2}} + \varepsilon 2(X/l) + \varepsilon 3(X/l)^2 + \varepsilon 4(X/l)^3 + \varepsilon 5(X/l)^4 + \varepsilon 6(X/l)^5 + \varepsilon 7(X/l)^6 \quad (30)$$

with

$\varepsilon 1 = + 0.22917$

$\varepsilon 2 = - 0.22972$

$\varepsilon 3 = + 0.21262.10$

$\varepsilon 4 = - 0.39557.10^2$

$\varepsilon 5 = + 0.32628.10^3$

$\varepsilon 6 = - 0.13077.10^4$

$\varepsilon 7 = + 0.20370.10^4$

• between X/l = 0.19606 and X/l = 1, by the formula

$$Y/l = \lambda 0 + \lambda 1(X/l) + \lambda 2(X/l)^2 + \lambda 3(X/l)^3 + \lambda 4(X/l)^4 + \lambda 5(X/l)^5 + \lambda 6(X/l)^6 \quad (31)$$

with

$\lambda 0 = + 0.32500.10^{-1}$

$\lambda 1 = + 0.29684$

$\lambda 2 = - 0.99723$

$\lambda 3 = + 0.82973$

$\lambda 4 = + 0.40616$

$\lambda 5 = - 0.10053.10$

$\lambda 6 = + 0.44222$

— whilst the reduced ordinates of the intrados line of said profile are given

• between X/l = 0 and X/l = 0.26478, by the formula

$$Y/l = \mu 1(X/l)^{\frac{1}{2}} + \mu 2(X/l) + \mu 3(X/l)^2 + \mu 4(X/l)^3 + \mu 5(X/l)^4 + \mu 6(X/l)^5 + \mu 7(X/l)^6 \quad (32)$$

with

$\mu 1 = - 0.19314$

$\mu 2 = - 0.22031$

$\mu 3 = + 0.44399.10$

EP 0 327 435 B1

$\mu4 = - 0.41389.10^2$
$\mu5 = + 0.23230.10^3$
$\mu6 = - 0.66179.10^3$
$\mu7 = + 0.74216.10^3$

• between X/l = 0.26478 and X/l = 1, by the formula

$$Y/l = v0 + v1(X/l) + v2(X/l)^2 + v3(X/l)^3 + v4(X/l)^4 + v5(X/l)^5 + v6(X/l)^6 \quad (33)$$

with

$v0 = - 0.42417.10^{-1}$
$v1 = - 0.29161$
$v2 = + 0.57883$
$v3 = + 0.41309$
$v4 = - 0.19045.10$
$v5 = + 0.18776.10$
$v6 = - 0.63583$

23. Profile according to claim 1,

characterized in that it is used for Mach numbers of adaptation Mad which, as a function of the maximum relative thickness e/l of said profile, vary according to the formula

$$Mad = \phi0 + \phi1(e/l) \quad (34)$$

with
$\phi0 = - 0.88636.10$
$\phi1 = + 0.15320.10$

49

Fig.1

Fig. 2A

$C_z$ max
M = 0.55

$C_p$

$x/\ell$

2

Fig. 2B

$C_z$ mini.
M = 0,4

$C_p$

$x/\ell$

3

Fig. 2C

$C_z$ mini.
M = 0,62

$C_p$

$x/\ell$

3

Fig. 3

$\sqrt{CO}$

$\sqrt{x}/l$

2

3

A

B

C

D

E

F

G

H

9   7   5   3   1   0

0,5

0,5

2.1   2.2   2.3

3.1   3.2   3.3

2

3

Fig. 4

EP 0 327 435 B1

Fig:5

EP 0 327 435 B1

## Fig.6

## Fig. 7

NACA 63 A 209

NACA 16 309

I

II

III

IV

V

VI

Fig.8A

IV

US

LS

Fig.8B

NACA 63A209

US

LS

Fig. 9 A

Fig. 9 B

NACA 16309

Fig. 10A

IV

Fig. 10B

NACA 63 A 209

Fig: 11 A

II

Fig: 11 B

NACA 16 309

Fig.12

NACA 63A209

IV

Cxs

0.01   0.02   0.03

Cz

1.5   1.0   0.5   0

Fig.13

II

NACA 16.309

$C_x$ s

0,03

0,02

0,01

$C_z$

1,5

1,0

0,5

0

Fig:14

$Cz\,max$

IV

NACA 63 A 209

Fig:15

$Cz\,max$

II

NACA 16 309